# EUROPÄISCHE PATENTSCHRIFT

(11) **EP 4 236 669 B1**
(45) Veröffentlichungstag und Bekanntmachung des Hinweises auf die Patenterteilung: **21.08.2024**
(21) Anmeldenummer: 21801908.1
(22) Anmeldetag: 28.10.2021
(51) Int. Cl.: A01D 34/17, A01D 34/135

(54) **MÄHMESSERVORRICHTUNG**
MOWER BLADE DEVICE
BARRE DE COUPE

(30) Priorität: 29.10.2020 EP 20204706; 29.10.2020 EP 20204705
(43) Veröffentlichungstag der Anmeldung: 06.09.2023
(73) Patentinhaber: Wepfer Technics AG, 8450 Andelfingen (CH)
(72) Erfinder: WEPFER, Hans, 8471 Berg-Dägerlen (CH)
(74) Vertreter: Keller Schneider Patent- und Markenanwälte AG
(86) Internationale Anmeldenummer: PCT/EP2021/080041
(87) Internationale Veröffentlichungsnummer: WO 2022/090421

(56) Entgegenhaltungen:
- AT-B- 398 020
- DE-A1- 1 582 418
- DE-A1- 10 246 558
- DE-B- 1 290 757
- DE-C- 380 537
- DE-C- 856 967
- FR-A- 771 266
- JP-U- S4 913
- US-A- 708 147

## Beschreibung

### Technisches Gebiet

Die Erfindung betrifft eine Mähmesservorrichtung mit einem Messerbalken und einem Doppelmesser-Schneidsystem, wobei das Doppelmesser-Schneidsystem ein oberes Schneidmesser und ein unteres Schneidmesser umfasst, welche relativ zueinander bewegbar ausgebildet sind, wobei das obere Schneidmesser mittels einer oberen Haltevorrichtung und das untere Schneidmesser mittels einer unteren Haltevorrichtung mit dem Messerbalken verbunden ausgebildet sind.

Mähmesservorrichtungen sind im Stand der Technik hinlänglich bekannt. Mähmesservorrichtungen werden auch Schneidwerke genannt und werden insbesondere bei Mähmaschinen, wie beispielsweise Mähdrescher oder Mähtral<toren, eingesetzt. Vorzugsweise umfassen derartige Mähmesservorrichtungen zwei gegeneinander hin- und her bewegbare aufeinanderliegende Messerschienen, welche jeweils eine Vielzahl von 1<lingenelementen aufweisen. Um den Verschleiß der Schneidmesser zu reduzieren, ist es einerseits vorteilhaft, die beiden aufeinanderliegenden Messerschienen aufeinander zu drücken, damit möglichst keine Verunreinigungen wie Steine oder dergleichen zwischen die Messerschienen gelangen können. Andererseits sollte der Druck zwischen den aufeinanderliegenden Messerschienen nicht zu groß sein, damit sich die Messerschienen gegenseitig nicht zu stark verschleißen.

### Stand der Technik

Beispielsweise ist aus der Druckschrift DE271 1352A1 eine Mähmesserandrücl<einrichtung mit einem an einen Fingerball<en anzuliegendem Unterteil und einen auf diesen aufgesetzten schwenkbaren Oberteil bekannt. Die Schwenkachse ist parallel zum Messerandrücl<teil des nach unten abgebogenen Oberteiles angeordnet. In einem vom Messerandrücl<teil abgewandten Bereich des Oberteiles ist mindestens eine Druckschraube zum Einstellen des Anpressdruckes des Messerandrücl<teiles vorhanden, und die Schwenkachse liegt näher bei der Hinterkante als beim Messerandrücl<teil. Dadurch gelingt es, eine Mähmesserandrücl<einrichtung zu schaffen, die eine niedrige Bauhöhe hat, sich leicht an unterschiedlich ausgebildete Fingerball<en und Messer unterschiedlicher Bauhöhe und Abnützung anpassen lässt. Ausserdem lässt sie sich leicht reinigen und preisgünstig herstellen.

Eine vergleichbare Mähmesserandrücl<einrichtung ist aus der Druckschrift DE 380,537 bekannt.

Die Druckschrift DE598983A offenbart ein Schneidwerk mit zwei Führungsball<en. Zwischen den Führungsbalken werden in der Spannung regelbare Federn angeordnet. Die obere Messerschiene nebst ihren Messern wird dadurch nicht nur vom Gewicht ihres Führungsbalkens entlastet, sondern sie kann mit dem Führungsbalken jederzeit, der Abnutzung entsprechend, nachgestellt werden. Die oberen Messer sind an der rechteckigen Schiene befestigt, die in eine Nut des Führungsbalkens eingreift. Die unteren Messer sind an einer rechteckigen Schiene befestigt, welche in eine Nut des unteren Führungsbalkens geführt ist. Die beiden Messerschienen werden mit den an ihnen befestigten Messerreihen in bekannter Weise gegenläufig hin und her bewegt. Am hinteren Rand sind die Führungsbalken in bekannter Weise durch mehrere Gelenke verbunden, so dass der obere Führungsbalken zum Reinigen des Schneidwerks und zum Herausnehmen der Messerschienen mit den Messern aufgeklappt werden kann. Hinter den Messerschienen sind die Balken auf den einander zugekehrten Seiten mit je einer Ausnehmung versehen, in denen zwischen den beiden Balken eine Druckfeder oder ein anderer elastischer Körper eingelegt ist. Die Federn haben das Bestreben, den oberen Führungsbalken von dem unteren Führungsbalken abzuheben. Das Gewicht des oberen Führungsbalkens wird daher durch die Federn annähernd ausgeglichen.

Die Druckschrift DE 102 46 558 A1 beschreibt eine Mähmesservorrichtung nach dem Oberbegriff des Patentanspruchs 1.

Nachteilig im Stand der Technik ist, dass der Verschleiß der bekannten Mähmesservorrichtungen und die sich daraus ergebenden Instandhaltungskosten sehr hoch sind.

### Darstellung der Erfindung

Aufgabe der Erfindung ist es, eine dem eingangs genannten technischen Gebiet zugehörende Mähmesservorrichtung zu schaffen, welche die Nachteile aus dem Stand der Technik zumindest teilweise überwindet und ein verbessertes Konzept für eine Mähmesservorrichtung vorschlägt.

Eine erste Lösung der Aufgabe ist durch die Merkmale des Anspruchs 1 definiert. Gemäss der Erfindung umfasst die Mähmesservorrichtung einen Messerbalken und ein Doppelmesser-Schneidsystem, wobei das Doppelmesser-Schneidsystem ein oberes Schneidmesser und ein unteres Schneidmesser umfasst, welche relativ zueinander bewegbar ausgebildet sind, wobei das obere Schneidmesser mittels einer oberen Haltevorrichtung und das untere Schneidmesser mittels einer unteren Haltevorrichtung mit dem Messerbalken verbunden ausgebildet sind. Die obere Haltevorrichtung ist mittels einer Führungsbuchse an dem Messerbalken gelagert und ist innerhalb der Führungsbuchse eine vorgespannte Zugfeder angeordnet. Die Zugkraft der Zugfeder ist dazu ausgebildet, über die obere Haltevorrichtung eine Anpresskraft des oberen Schneidmessers auf das untere Schneidmesser zu bewirken.

Durch den erfindungsgemäßen Gegenstand wird beispielsweise der technische Vorteil erreicht, dass die Zugfeder ausschliesslich auf Zug beansprucht wird. Dadurch wird die Anpresskraft des oberen Schneidmessers auf das untere Schneidmesser nicht durch eine Kippbewegung der Haltevorrichtung erzeugt, sondern durch eine reine Zugbewegung der Haltevorrichtung übertragen, wobei die Wirkrichtung der Anpresskraft parallel zur Längsrichtung der Führungsbuchse ausgebildet ist. Dadurch wird der Verschleiss der Schneidmesser deutlich reduziert, da die Anpresskraft gleichmässig verteilt wird. Zusätzlich bringt dies den Vorteil mit sich, dass ein Wechsel des Schneidmessers mit geringerem Aufwand möglich ist, da eine Demontage der Haltevorrichtung nur wenig Aufwand erzeugt.

Ein weiterer bedeutender Vorteil der erfindungsgemässen Vorrichtung liegt in der mechanischen Belastung der Mähmesser im Betrieb begründet. Häufig wird das obere Schneidmesser durch Steine nach oben weggedrückt oder durch Verunreinigungen zwischen dem oberen Schneidmesser und dem unteren Schneidmesser stark deformiert. Diese Deformationen belasten die Schneidmesser zusätzlich und erhöhen den Verschleiss. Aufgrund der in der Führungsbuchse gelagerten Feder, kann die Haltevorrichtung der Anpresskraft entgegengerichtet nachgeben, wodurch die Verunreinigungen selbstständig entfernt werden und keinen dauerhaften Verschleiss an den Schneidmessern bewirken können. Dies verlängert die Nutzungszeit der Mähmesservorrichtung, da der Verschleiss zusätzlich reduziert wird.

Nach einer bevorzugten Ausführungsform ist die Führungsbuchse in einer Gewindebuchse gehalten. Dadurch wird beispielsweise der technische Vorteil erreicht, dass die Führungsbuchse gegen Verunreinigungen geschützt angeordnet werden kann und eine geeignete Krafteinleitung von der Haltevorrichtung über die Führungsbuchse auf die Gewindebuchse erfolgen kann.

Gemäss einer weiteren Ausführungsform ist die Gewindebuchse über ein Aussengewinde mit dem Messerbalken verschraubbar ausgebildet. Dadurch wird der zusätzliche Vorteil erreicht, dass die Gewindebuchse eine zuverlässige Krafteinleitung in den Messerbalken sicherstellt. Des Weiteren ist es möglich, die Gewindebuchse ohne gesteigerten Montageaufwand zu demontieren oder zu wechseln. Zusätzlich kann mittels des Gewindes die absolute Position der Gewindebuchse relativ zum Messerbalken verändert werden. Dies kann beispielsweise nach einem Schneidmesserwechsel zur präzisen Einstellung der Mähmesservorrichtung vorteilhaft sein.

Um den Verschleiss im Betrieb der Mähmesservorrichtung weiter zu reduzieren und um die Einsatzdauer der erfindungsgemässen Vorrichtung zu steigern, ist die Führungsbuchse über ein Lager in der Gewindebuchse gehalten. Das Lager kann beispielsweise zwei verschiedene Lagerfunktionen beinhalten, die im Betrieb der Mähmesservorrichtung auftreten. Dies betrifft einerseits eine rotatorische Komponente, welche aufgrund der Bewegung des oberen und des unteren Schneidmessers zueinander erzeugt wird. Diese rotatorische Belastung lässt sich beispielsweise durch den Einsatz eines ringförmigen Wälzlagers aufnehmen. Andererseits wird das Lager auch in Längsrichtung der Führungsbuchse beansprucht, weshalb das Anordnen eines Gleitlagers vorteilhaft sein kann. Ideal ist ein Lager, welches sowohl die rotatorische Belastung als auch die Belastung in Längsrichtung der Führungsbuchse aufnehmen kann.

Nach einer vorteilhaften Ausführungsform ist das Lager an einer Oberseite und einer Unterseite der Gewindebuchse ausgebildet. Dadurch wird einer optimalen Lagerung der Führungsbuchse in der Gewindebuchse Rechnung getragen, wodurch der Verschleiss zusätzlich minimiert und somit die Lebensdauer der Mähmesservorrichtung insgesamt gesteigert werden kann.

Gemäss einer weiteren vorteilhaften Ausführungsform ist die Zugfeder mittels einer Federschraube spannbar ausgebildet. Dadurch wird beispielsweise der technische Vorteil erreicht, dass die Spannung und somit die Zugkraft der Feder einstellbar ausgebildet ist. Insbesondere lässt sich die Spannung je nach Bedarf durch Betätigung der Federschraube erhöhen oder reduzieren. Beispielsweise kann dies nach einem Wechsel der Mähmesser vorteilhaft sein, um die optimale Einstellung der Mähmesservorrichtung sicherzustellen. Zudem ist es möglich, die Spannung der Zugfeder und damit die Anpresskraft des oberen Schneidmessers auf das untere Schneidmesser für einen bestimmten Einsatzzweck zu variieren.

Um die Anpresskraft des oberen Schneidmessers auf das untere Schneidmesser zu verändern, ist die Federschraube über einen Buchsendecl<el von außen einstellbar ausgebildet. Der Buchsendecl<el ist besonders einfach zu betätigen. Ein spezielles Werkzeug ist nicht zwingend notwendig. Beispielsweise kann der Buchsendecl<el manuell oder mittels eines einfachen handelsüblichen Werkzeugs betätigt werden. Insbesondere sind ein Schraubenzieher, ein Inbusschlüssel, ein Ring- oder Maulschlüssel hierfür geeignet.

In einer weiterführenden Ausführungsform weist der Buchsendecl<el gegenüber der Gewindebuchse einen radialen Überstand auf. Dies ist eine konstruktiv besonders einfache Lösung. Es können größtenteils Standardbauteile eingesetzt werden, wobei auch Reparaturen oder Inspektionen leicht zu bewerkstelligen sind.

Nach einer zusätzlichen Ausführungsform weist die obere Haltevorrichtung eine Kröpfung auf, welche zwischen Führungsbuchse und oberem Schneidmesser angeordnet ist. Die Kröpfung an der oberen Haltevorrichtung sorgt für eine optimale räumliche Anordnung des oberen Schneidmessers relativ zum unteren Schneidmesser. Insbesondere kompensiert die Kröpfung die räumliche Ausdehnung der Federschraube, welche durch die Orientierung der Führungsbuchse orthogonal zum Messerbalken angeordnet ist. Somit ist es nicht notwendig, dass die obere Haltvorrichtung eine eigene Elastizität aufweist. Stattdessen kann die obere Haltevorrichtung als steifes Bauteil ausgebildet sein, welches die axiale Zugkraft der Federschraube unmittelbar auf das obere Schneidmesser überträgt.

Gemäß einer zusätzlichen Ausführungsform ist das obere Schneidmesser in einem Schneidmesserlager der oberen Haltevorrichtung geführt. Das Schneidmesserlager ermöglicht einen verschleissreduzierten Betrieb der Mähmesservorrichtung und erhöht die Einsatzdauer der erfindungsgemässen Vorrichtung.

Das Schneidmesserlager kann beispielsweise zwei verschiedene Lagerfunktionen beinhalten, die im Betrieb der Mähmesservorrichtung auftreten. Dies betrifft einerseits eine rotatorische Komponente, welche aufgrund der Bewegung des oberen und des unteren Schneidmessers zueinander erzeugt wird. Diese rotatorische Belastung lässt sich beispielsweise durch den Einsatz eines ringförmigen Wälzlagers aufnehmen. Andererseits wird das Schneidmesserlager durch die Anpresskraft der oberen Haltevorrichtung auf die untere Haltevorrichtung auch in Längsrichtung beansprucht. Zudem wird das Schneidmesserlager durch Steinschlag oder Schnittgut belastet. Ideal ist ein Lager, welches sowohl die rotatorische Belastung als auch die Belastung in Längsrichtung aufnehmen kann.

Um gegenüber der oberen Haltevorrichtung ein Widerlager zu bilden, welches die Anpresskraft aufnehmen kann, ist die untere Haltevorrichtung mittels einer Führungsbuchse an dem Messerbalken gelagert. Im Gegensatz zur oberen Haltevorrichtung ist die untere Haltevorrichtung in Richtung der Zugfeder unnachgiebig zum Messerbalken ausgebildet. Somit ist sichergestellt, dass das obere Schneidmesser und das untere Schneidmesser optimal aneinander anliegen können und die Anpresskraft des oberen Schneidmessers auf das untere Schneidmesser sichergestellt ist.

Nach einer bevorzugten Ausführungsform ist die Führungsbuchse in einer Gewindebuchse gehalten. Dadurch kann beispielsweise der technische Vorteil erreicht werden, dass die Führungsbuchse gegen Verunreinigungen geschützt angeordnet werden kann und eine geeignete Krafteinleitung von der unteren Haltevorrichtung über die Führungsbuchse auf die Gewindebuchse erfolgen kann.

Um die untere Haltevorrichtung möglichst einfach zu montieren oder zu wechseln, ist die Gewindebuchse über ein Aussengewinde mit dem Messerbalken verschraubbar ausgebildet. Dadurch wird der zusätzliche Vorteil erreicht, dass die Gewindebuchse eine zuverlässige Krafteinleitung in den Messerbalken sicherstellt. Des Weiteren ist es möglich, die Gewindebuchse ohne gesteigerten Montageaufwand zu demontieren oder zu wechseln. Zusätzlich kann mittels des Gewindes die absolute Position der Gewindebuchse relativ zum Messerbalken verändern werden. Dies kann beispielsweise nach einem Schneidmesserwechsel zur präzisen Einstellung der Mähmesservorrichtung in Abstimmung mit der oberen Haltevorrichtung vorteilhaft sein.

Gemäss einer besonders bevorzugten Ausführungsform ist die untere Haltevorrichtung mittels einer Schraube mit dem Messerbalken verschraubbar, wobei sich die Schraube vollständig durch die Führungsbuchse hindurch erstreckt. Dadurch wird beispielsweise der technische Vorteil erreicht, dass die Fixierung der unteren Haltevorrichtung mit dem Messerbalken besonders einfach zu realisieren ist. Durch das Hindurchführen der Schraube durch die vollständige Führungsbuchse hindurch, kann die Krafteinleitung besonders symmetrisch erfolgen. Zudem ist ein Lösen oder ggf. ein Wechsel der unteren Haltevorrichtung besonders einfach realisierbar.

Üblicherweise sind an einem Schneidmesser mehrere 1<lingenelemente seriell entlang des Messerbalkens angeordnet, wobei meist einem oberen Klingenelement ein unteres Klingenelement zugeordnet ist. Nach einer besonderen Ausführungsform, umfasst das obere Schneidmesser eine Vielzahl von 1<lingenelementen, wobei jedem dritten oberen Klingenelement eine obere Haltevorrichtung zugeordnet ist. Dadurch wird beispielsweise der technische Vorteil erreicht, dass eine kontinuierliche Kraftverteilung auf alle Klingenelemente entlang dem Messerbalken sichergestellt werden kann. Dadurch wird der Verschleiss reduziert und die Einsatzdauer der erfindungsgemässen Vorrichtung zusätzlich erhöht.

Eine zweite Lösung der Aufgabe ist nachfolgend beschrieben. Die zweite Lösung kann als eine eigene Erfindung betrachtet werden, die unabhängig von den anderen Lösungen der Aufgabe besteht.

Die zweite Lösung der Aufgabe betrifft eine Mähmesservorrichtung mit einem Doppelmesser-Schneidsystem, wobei das Doppelmesser-Schneidsystem ein oberes Schneidmesser und ein unteres Schneidmesser umfasst, welche mittels eines einseitigen Antriebs relativ zueinander bewegbar ausgebildet sind, wobei zumindest das obere Schneidmesser oder das untere Schneidmesser jeweils mehrere 1<lingenelemente umfasst, die über einen Messerrücken miteinander verbunden ausgebildet sind, und wobei die Klingenelemente und der Messerrücken als gemeinsames integrales Bauteil ausgebildet sind, und wobei die Mähmesservorrichtung einen auswechselbaren Messerkopf zum Einleiten einer Antriebsbewegung eines seitlichen Antriebs auf das Doppelmesser-Schneidsystem aufweist.

Aufgrund der integralen einstückigen Ausbildung der 1<lingenelemente mit dem Messerrücken, wird eine Auswechselbarkeit des oberen Schneidmessers und des unteren Schneidmessers deutlich vereinfacht. Zudem werden durch die einstückige Ausbildung die Masse und die Dicke des oberen Schneidmessers und des unteren Schneidmessers erheblich reduziert. Die reduzierte Masse ermöglicht hierbei eine Verschleissreduzierung, wodurch die Lebensdauer der Mähmesservorrichtung erhöht wird. Die reduzierte Dicke des oberen Schneidmessers und des unteren Schneidmessers verbessert das Abgleiten von Schnittgut im Betrieb der Mähmesservorrichtung, da sämtliche Kanten durch Materialaufdickung des Messerrückens, wie sie beispielsweise durch angenietete oder aufgeschweisste Klingenelemente entstehen, eliminiert werden.

Ein weiterer Vorteil ergibt sich dadurch, dass die integrale einstückige Ausbildung der Klingenelemente das Schleifen und Schärfen der einzelnen Klingenelemente verbessert. Materialaufdickungen des Messerrückens, wie sie durch angenietete oder aufgeschweisste Klingenelemente entstehen, erschweren die Zugänglichkeit zu den Klingenelementen, um diese regelmäßig zu schleifen und zu schärfen. Somit wird die Instandsetzung vereinfacht und die Handhabung verbessert.

Ein zusätzlicher Vorteil ergibt sich durch die Auswechselbarkeit des Messerkopfes. Zum Zweck des Austausches des oberen Schneidmessers oder des unteren Schneidmessers kann der Messerkopf vollständig entfernt werden. Dies vereinfacht den Aufwand beim Wechseln der Schneidmesser. Ein besonderer Vorteil ergibt sich erneut beim Schleifen der Klingenelemente. Durch das vollständige Entfernen des Messerkopfes wird die Zugänglichkeit zu den Klingenelementen, um diese zu schleifen und zu schärfen, erleichtert. Somit wird die Einsatzdauer erhöht und die Instandsetzung sowie die Handhabung verbessert. Des Weiteren ergeben sich dadurch Kosteneinsparungen.

Nach einer bevorzugten Ausführungsform weist der Messerkopf ein Eingreifelement auf, welches zum Eingreifen in eine korrespondierende Eingreifaufnahme im Messerrücken des oberen Schneidmessers oder des unteren Schneidmessers ausgebildet ist. Dadurch wird beispielsweise der technische Vorteil erreicht, dass die Krafteinleitung des Messerkopfes besonders einfach in das obere Schneidmesser oder das untere Schneidmesser erfolgen kann. Es sind somit keine zusätzlichen Mittel oder Bauteile zur Krafteinleitung notwendig, wodurch die Masse insgesamt und die Herstellungskosten reduziert werden können.

Gemäss einer weiteren Ausführungsform, umfasst das Eingreifelement zumindest zwei Eingreifvorsprünge. Dadurch wird einerseits der Vorteil erreicht, dass eine sehr einfache aber feste Zuordnung zwischen Messerkopf und Schneidmesser realisiert werden kann. Zusätzliche Eingreifvorsprünge sind denkbar, für die Funktion jedoch nicht zwingend erforderlich. Daher ist die Realisierung mittels zweier Eingreifelemente besonders effizient und einfach in der Herstellung.

Darauf aufbauend umfasst die Eingreifaufnahme des Messerrückens mit den Eingreifelementen korrespondierende Eingreiföffnungen. Dadurch wird der besondere Vorteil erreicht, dass zwischen Messerrücken und Messerkopf keine zusätzlichen Bauteile angeordnet werden müssen. Beispielsweise können die Eingreiföffnungen unmittelbar in den Messerrücken eingestanzt werden. Denkbar wäre hierbei eine Herstellung der Schneidmesser einschließlich der Klingenelemente und des Messerrückens als einstückig ausgebildete Klinge aus Flachstahl. Dieser Flachstahl ermöglicht sowohl das Ausstanzen der Klingenelemente als auch das Ausstanzen der Eingreiföffnungen. Insgesamt wird die Herstellung der Mähvorrichtung als auch deren Montage dadurch besonders effizient.

Um die Einsatzdauer der Mähmesservorrichtung zu erhöhen und den Verschleiss zu reduzieren, weist der Messerkopf einen elastischen Abschnitt auf, welcher zwischen einem Verbindungsabschnitt des Messerkopfs mit dem Messerrücken und einem Anschluss zum Antrieb ausgebildet ist.

Im Betrieb der Mähmesservorrichtung kommt es beispielsweise durch Steine oder andere Gegenstände dazu, dass die Schneidmesser starken mechanischen Belastungen wie Schlägen oder Deformationen ausgesetzt sind. Ein steifer unflexibler Messerkopf als Verbindung zwischen Schneidmesser und seitlich angebundenem Antrieb belastet alle Bestandteile der Wirkungskette zumindest mechanisch. Dies erhöht zusätzlich den Verschleiss der gesamten Mähmesservorrichtung und verkürzt deren Lebensdauer deutlich. Der elastische Abschnitt des Messerkopfs kann hierbei insbesondere Schwingungen und Deformationen dämpfen, wodurch eine Entlastung der Mähmesservorrichtung bewirkt wird. Somit steigert der elastische Abschnitt die Einsatzdauer.

Nach einer besonders bevorzugten Ausführungsform ist der elastische Abschnitt aus einem Metall hergestellt. Metall hat eine geeignete Festigkeit und kann gleichzeitig die notwendige Elastizität aufweisen. Beispielsweise ist der elastische Abschnitt aus einem Federstahl hergestellt. Alternativ ist es jedoch ebenso denkbar, den elastischen Abschnitt aus einem Kunststoff oder einem anderen geeignete Material herzustellen.

Gemäss einer besonders bevorzugten Ausführungsform ist der elastische Abschnitt zum Dämpfen einer Bewegung in einer Ebene ausgebildet, welche parallel zu der durch die 1<lingenelemente des oberen Schneidmessers oder des unteren Schneidmessers definierten Ebene ausgebildet ist. Dadurch wird beispielsweise der technische Vorteil erreicht, dass mechanische Einflüsse, wie beispielsweise Schläge oder Vibrationen, welche im Betrieb von einer Vorderseite auf die Schneidmesser einwirken, reduziert und gedämpft werden können.

Nach einer weiteren Ausführungsform ist das obere Schneidmesser mittels einer oberen Haltevorrichtung mit einem Messerbalken verbunden ausgebildet, wobei die obere Haltevorrichtung mittels einer Führungsbuchse an dem Messerbalken gelagert ist. Innerhalb der Führungsbuchse ist eine vorgespannte Zugfeder zum Bewirken einer Anpresskraft des oberen Schneidmessers auf das untere Schneidmesser angeordnet.

Häufig werden die Schneidmesser durch Verunreinigungen, wie beispielsweise Steine, zwischen dem oberen Schneidmesser und dem unteren Schneidmesser stark deformiert. Diese Deformationen belasten die Schneidmesser zusätzlich und erhöhen den Verschleiss.

Aufgrund der in der Führungsbuchse gelagerten Feder, kann die Haltevorrichtung translatorisch der Anpresskraft entgegengerichtet nachgeben, wodurch die Verunreinigungen selbstständig entfernt werden und dauerhafter Verschleiss an den Schneidmessern reduziert werden kann. Dies verlängert die Nutzungszeit der Mähmesservorrichtung, da der Verschleiss zusätzlich reduziert wird.

Mit anderen Worten ist die Feder dazu geeignet, mechanische Einflüsse, wie beispielsweise Schläge oder Vibrationen zu reduzieren, welche im Betrieb auf die Schneidmesser einwirken und orthogonal zu derjenigen Ebene orientiert sind, welche durch die 1<lingenelemente des oberen Schneidmessers oder des unteren Schneidmessers definiert wird.

Im Zusammenhang mit der vorstehenden Ausführungsform umfasst die Mähmesservorrichtung Dämpfungselemente, welche dazu ausgebildet sind, Belastungen in unterschiedlichen Richtungen zu dämpfen und damit den Verschleiss zu reduzieren.

Konkret ist der elastische Abschnitt des Messerkopfs dazu ausgebildet, mechanische Belastungen zu dämpfen, welche in einer Ebene auftreten, welche parallel zu derjenigen Ebene angeordnet ist, die durch die 1<lingenelemente des oberen Schneidmessers oder des unteren Schneidmessers definiert ist. Diese mechanischen Einflüsse entstehen beispielsweise durch Schläge oder Vibrationen, welche im Betrieb von einer Vorderseite auf die Schneidmesser einwirken.

In Kombination dazu ermöglicht die Zugfeder innerhalb der Führungsbuchse, dass mechanische Einflüsse, welche im Betrieb auf die Schneidmesser einwirken und orthogonal zu derjenigen Ebene orientiert sind, welche durch die 1<lingenelemente des oberen Schneidmessers oder des unteren Schneidmessers definiert wird, aufgenommen oder abgedämpft werden.

Somit umfasst die Mähmesservorrichtung eine insgesamt sehr verschleissarme Lösung mit hoher Einsatzdauer.

Nach einer bevorzugten Ausführungsform ist die Führungsbuchse in einer Gewindebuchse gehalten. Dadurch wird beispielsweise der technische Vorteil erreicht, dass die Gewindebuchse gegen Verunreinigungen geschützt angeordnet werden kann und eine geeignete Krafteinleitung von der Haltevorrichtung über die Führungsbuchse auf die Gewindebuchse erfolgen kann.

Gemäss einer weiteren Ausführungsform ist die Gewindebuchse über ein Aussengewinde mit dem Messerbalken verschraubbar ausgebildet. Dadurch wird der zusätzliche Vorteil erreicht, dass die Gewindebuchse eine zuverlässige Krafteinleitung in den Messerbalken sicherstellt. Des Weiteren ist es möglich, die Gewindebuchse ohne gesteigerten Montageaufwand zu demontieren oder zu wechseln. Zusätzlich kann mittels des Gewindes die absolute Position der Gewindebuchse relativ zum Messerbalken verändert werden. Dies kann beispielsweise nach einem Schneidmesserwechsel zur präzisen Einstellung der Mähmesservorrichtung vorteilhaft sein.

Nach einer weiteren vorteilhaften Ausführungsform ist die Zugfeder mittels einer Federschraube spannbar ausgebildet. Dadurch wird beispielsweise der technische Vorteil erreicht, dass die Spannung und somit die Zugkraft der Feder einstellbar ausgebildet ist. Insbesondere lässt sich die Spannung je nach Bedarf durch Betätigung der Federschraube erhöhen oder reduzieren. Beispielsweise kann dies nach einem Wechsel der Mähmesser vorteilhaft sein, um die optimale Einstellung der Mähmesservorrichtung sicherzustellen. Zudem ist es möglich, die Spannung der Zugfeder und damit die Anpresskraft des oberen Schneidmessers auf das untere Schneidmesser für einen bestimmten Einsatzzweck zu variieren.

Um die Anpresskraft des oberen Schneidmessers auf das untere Schneidmesser zu verändern, ist die Federschraube über einen Buchsendecl<el von außen einstellbar ausgebildet. Der Buchsendecl<el ist besonders einfach zu betätigen. Ein spezielles Werkzeug ist nicht zwingend notwendig. Beispielsweise kann der Buchsendecl<el manuell oder mittels eines einfachen handelsüblichen Werkzeugs betätigt werden. Insbesondere sind ein Schraubenzieher, ein Inbusschlüssel, ein Ring- oder Maulschlüssel hierfür geeignet.

Nach einer zusätzlichen Ausführungsform ist das obere Schneidmesser einschließlich den 1<lingenelementen und dem Messerrücken als einstückigausgebildete Klinge, insbesondere aus einem Flachstahl gefertigt, ausgebildet. Die Ausbildung aus einem Flachstahl ist hierbei besonders preiswert in der Herstellung. Zusätzlich ist die Ausbildung aus Flachstahl mit Gewichtseinsparungen verbunden, welche sich wiederum verschleissreduzierend und damit positiv auf die Lebensdauer der Mähmesservorrichtung auswirken. Zusätzlich oder alternativ kann auch das untere Schneidmesser einschließlich den Klingenelementen und dem Messerrücken als einstückigausgebildete Klinge, insbesondere aus einem Flachstahl gefertigt, ausgebildet sein.

Ein besonderer Vorteil ergibt sich aus der Reduzierung der Dicke des oberen Schneidmessers und des unteren Schneidmessers, welche mit der einstückigen Ausbildung der Klinge verbunden sind. Die reduzierte Dicke der Schneidmesser verbessert das Abgleiten von Schnittgut im Betrieb der Mähmesservorrichtung, da sämtliche Kanten durch Materialaufdickung des Messerrückens, wie sie beispielsweise durch angenietete oder aufgeschweisste Klingenelemente entstehen, eliminiert werden.

Gemäss einer weiteren Ausführungsform umfasst jedes Klingenelement zwei V-förmig ausgebildete Schneidkanten, wobei sich die Schneidkante eines ersten Klingenelements und die gegenüberliegende Schneidkante eines benachbarten Klingenelements kontinuierlich über den Messerrücken erstrecken. Mit anderen Worten sind die Schneidkanten durchgehend ausgebildet und es gibt keine TotKanten mehr. Dies erhöht die Effizienz der Mähmesservorrichtung erheblich. Insbesondere ist diese Ausführungsform im Zusammenhang mit derjenigen Ausbildung vorteilhaft, nach welcher die Klingenelemente und der Messerrücken als einstückig ausgebildete Klinge, insbesondere aus einem Flachstahl gefertigt, ausgebildet sind. Durch die besonders flache Ausführung der einstückigen Klinge können die kontinuierlich ausgebildeten Schneidkanten besonders leicht vollständig geschliffen und geschärft werden.

Gewöhnlich ist eine Vielzahl an Schneidmessern seriell entlang des Messerbalkens angeordnet, wobei meist jedem oberen Schneidmesser ein unteres Schneidmesser zugeordnet ist. Nach einer besonderen Ausführungsform sind entlang des Messerbalkens eine Vielzahl oberer Schneidmesser und unterer Schneidmesser angeordnet, wobei jedem dritten oberen Schneidmesser eine obere Haltevorrichtung zugeordnet ist. Dadurch wird beispielsweise der technische Vorteil erreicht, dass eine kontinuierliche Kraftverteilung auf alle Schneidmesser entlang des Messerbalkenssichergestellt werden kann. Dadurch wird der Verschleiss reduziert und die Einsatzdauer der erfindungsgemässen Vorrichtung zusätzlich erhöht.

Eine dritte Lösung der Aufgabe ist nachfolgend beschrieben. Die dritte Lösung kann als eine eigene Erfindung betrachtet werden, die unabhängig von den anderen Lösungen der Aufgabe besteht.

Die dritte Lösung betrifft eine Mähmesservorrichtung mit einem Doppelmesser-Schneidsystem, wobei das Doppelmesser-Schneidsystem ein oberes Schneidmesser und ein unteres Schneidmesser umfasst, welche mittels eines einseitigen Antriebs relativ zueinander bewegbar ausgebildet sind. Die Mähmesservorrichtung umfasst einen Messerbalken, welcher mittels einer oberen Haltevorrichtung mit dem oberen Schneidmesser und mittels einer unteren Haltevorrichtung mit dem unteren Schneidmesser verbunden ausgebildet ist. Der Messerbalken weist ein erstes Führungsmittel zum Führen des unteren Schneidmessers während einer Bewegung durch den einseitigen Antrieb relativ zum Messerbalken auf, wobei das erste Führungsmittel zwischen einer Betriebsposition zum Führen des unteren Schneidmessers während einer Bewegung durch den einseitigen Antrieb relativ zum Messerbalken und einer Freigabeposition zum Freigeben des unteren Schneidmessers überführbar ausgebildet ist.

Dadurch wird beispielsweise der technische Vorteil erreicht, dass ein schneller Wechsel des unteren Schneidmessers erfolgen kann. Mit anderen Worten muss lediglich das erste Führungsmittel von der Betriebsposition in die Freigabeposition überführt werden und die Demontage des unteren Schneidmessers kann in kurzer Zeit und ohne grossen Aufwand erfolgen. Dadurch kann die Einsatzzeit der Mähmesservorrichtung insgesamt gesteigert werden.

Nach einer bevorzugten Ausführungsform erfolgt das Überführen des ersten Führungsmittels zwischen der Betriebsposition und der Freigabeposition schwenkend. Dadurch wird beispielsweise der technische Vorteil erreicht, dass das Überführen manuell und auf einfacher Art und Weise erfolgen kann.

Gemäss einer zusätzlichen Ausführungsform erfolgt das Schwenken des ersten Führungsmittels zwischen der Betriebsposition und der Freigabeposition in einer Ebene, welche parallel zu einer Bewegungsebene der sich relativ zueinander bewegbaren oberen und unteren Schneidmesser angeordnet ist.

Um ein ungewolltes Freigeben des unteren Schneidmessers zu verhindern, weist das erste Führungsmittel eine Fixiereinrichtung zum Fixieren des ersten Führungsmittels in der Betriebsposition auf. Beispielsweise ist die Fixiereinrichtung als manuell betätigbare Schraube ausgebildet. Vorzugsweise hat die Schraube einen flachen Kopf, um die flache Bauweise des Doppelmesser-Schneidsystems sicherzustellen. Im Betrieb der Mähmesservorrichtung treten mitunter hohe Beschleunigungen und starke Stösse auf. Somit erfüllt die Fixiereinrichtung einen Sicherheitsaspekt, da die Fixiereinrichtung trotz der grossen Beschleunigungen und Stösse eine sichere Funktion der Mähmesservorrichtung realisiert.

Nach einer besonders bevorzugten Ausführungsform umfasst das untere Schneidmesser einen Gleitvorsprung zum gleitfähigen Eingriff in das erste Führungsmittel. Dadurch wird beispielsweise der technische Vorteil erreicht, dass eine einfache Führung des unteren Schneidmessers sichergestellt ist. Mit anderen Worten kommt der Fixiereinrichtung eine Mehrfachfunktion zu. Einerseits sichert die Fixiereinrichtung das untere Schneidmesser im Betrieb. Andererseits ermöglicht die Fixiereinrichtung im Zusammenspiel mit dem Gleitvorsprung eine geführte Bewegung des unteren Schneidmessers unabhängig von im Betrieb der Mähmesservorrichtung auftretenden Beschleunigungen und Stössen. Zusätzlich kann die Fixiereinrichtung in die Freigabeposition überführt werden, wodurch das unter Schneidmesser demontiert werden kann. Beispielsweise ist das Führungsmittel zumindest teilweise aus Kunststoff hergestellt, wodurch weniger Reibung zwischen dem Gleitvorsprung und dem Führungsmittel entsteht.

Gemäss einer besonders bevorzugten Ausführungsform weist das untere Schneidmesser einen auswechselbaren unteren Messerkopf zum Einleiten einer Antriebsbewegung eines seitlichen Antriebs auf das untere Schneidmesser auf, wobei der Gleitvorsprung an dem unteren Messerkopf angeordnet ist. Dadurch ergibt sich beispielsweise der technische Vorteil, dass zum Zweck des Austausches des unteren Schneidmessers der Messerkopf vollständig entfernt werden kann. Dies vereinfacht den Aufwand beim Wechseln des unteren Schneidmessers. Ein besonderer Vorteil ergibt sich erneut beim Schleifen der 1<lingenelemente. Durch das vollständige Entfernen des Messerkopfes wird die Zugänglichkeit zu den 1<lingenelementen, um diese zu schleifen und zu schärfen, erleichtert. Somit wird die Einsatzdauer erhöht und die Instandsetzung sowie die Handhabung verbessert. Des Weiteren ergeben sich dadurch Kosteneinsparungen. Dadurch, dass der Gleitvorsprung direkt an dem unteren Messerkopf angeordnet ist, kann die Zahl der Bauteile und damit die Komplexität reduziert werden.

Um die Einsatzdauer der Mähmesservorrichtung zu erhöhen und den Verschleiss zu reduzieren, weist der untere Messerkopf einen elastischen Abschnitt auf, welcher zwischen dem Gleitvorsprung und einem Anschluss zum Antrieb ausgebildet ist.

Im Betrieb der Mähmesservorrichtung kommt es beispielsweise durch Steine oder andere Gegenstände dazu, dass die Schneidmesser starken mechanischen Belastungen wie Schlägen oder Deformationen ausgesetzt sind. Ein steifer unflexibler Messerkopf als Verbindung zwischen Schneidmesser und seitlich angebundenem Antrieb belastet alle Bestandteile der Wirkungskette zumindest mechanisch. Dies erhöht zusätzlich den Verschleiss der gesamten Mähmesservorrichtung und verkürzt deren Lebensdauer deutlich. Der elastische Abschnitt des unteren Messerkopfs kann hierbei insbesondere Schwingungen und Deformationen dämpfen, wodurch eine Entlastung der Mähmesservorrichtung bewirkt wird. Somit steigert der elastische Abschnitt die Einsatzdauer.

Nach einer besonders bevorzugten Ausführungsform ist der elastische Abschnitt aus einem Metall hergestellt. Metall hat eine geeignete Festigkeit und kann gleichzeitig die notwendige Elastizität aufweisen. Beispielsweise ist der elastische Abschnitt aus einem Federstahl hergestellt. Alternativ ist es jedoch ebenso denkbar, den elastischen Abschnitt aus einem Kunststoff oder einem anderen geeignete Material herzustellen.

Gemäss einer besonders bevorzugten Ausführungsform ist der elastische Abschnitt zum Dämpfen einer Bewegung in einer Ebene ausgebildet, welche parallel zu der durch die 1<lingenelemente des oberen Schneidmessers oder des unteren Schneidmessers definierten Ebene ausgebildet ist.

Nach einer weiteren Ausführungsform weist der Messerbalken ein zweites Führungsmittel zum Führen des oberen Schneidmessers während einer Bewegung durch den einseitigen Antrieb relativ zum Messerbalken auf, wobei das zweite Führungsmittel zwischen einer Betriebsposition zum Führen des oberen Schneidmessers während einer Bewegung durch den einseitigen Antrieb relativ zum Messerbalken und einer Freigabeposition zum Freigeben des oberen Schneidmessers überführbar ausgebildet ist. Dadurch wird beispielsweise der technische Vorteil erreicht, dass das obere Schneidmesser eine einfache Zusatzführung aufweist. Einerseits ermöglicht das zweite Führungsmittel eine geführte Bewegung des oberen Schneidmessers unabhängig von im Betrieb der Mähmesservorrichtung auftretenden Beschleunigungen und Stössen. Andererseits kann die Fixiereinrichtung in die Freigabeposition überführt werden, wodurch das obere Schneidmesser einfach demontiert werden kann.

Um das Überführen in die Freigabeposition besonders einfach zu realisieren, erfolgt das Überführen des zweiten Führungsmittels zwischen der Betriebsposition und der Freigabeposition mit einer Translationsbewegung. Beispielsweise ist das zweite Führungsmittel dazu ausgebildet, gleichzeitig auch das untere Schneidmesser zu führen.

Gemäss einer weiteren besonders bevorzugten Ausführungsform ist das zweite Führungsmittel zum Führen des unteren Schneidmessers während einer Bewegung durch den einseitigen Antrieb relativ zum Messerbalken ausgebildet. Hierfür greift das zweite Führungsmittel über einen Führungsarm zwischen dem oberen Schneidmesser und dem Messerbalken hindurch. Somit wird der zusätzliche Vorteil erreicht, dass mit dem Überführen des zweiten Führungsmittels von der Betriebsposition in die Freigabeposition gleichzeitig das obere und das untere Schneidmesser freigegeben werden.

Eine vierte Lösung der Aufgabe ist nachfolgend beschrieben. Die vierte Lösung kann als eine eigene Erfindung betrachtet werden, die unabhängig von den anderen Lösungen der Aufgabe besteht.

Die vierte Lösung betrifft eine Mähmesservorrichtung mit einem Doppelmesser-Schneidsystem, wobei das Doppelmesser-Schneidsystem ein oberes Schneidmesser und ein unteres Schneidmesser umfasst, welche mittels eines einseitigen Antriebs relativ zueinander bewegbar ausgebildet sind. Das obere Schneidmesser und das untere Schneidmesser weisen jeweils mehrere Klingenelemente auf, und jedes Klingenelement umfasst voneinander weggerichtet angeordnete Schneidkanten. Die Schneidkanten jeden Klingenelements sind ausgehend von einem Messerrücken in Richtung einer Schneidmesserspitze zumindest abschnittsweise konkav ausgebildet.

Beispielsweise wird dadurch der technische Vorteil erreicht, dass durch die zumindest teilweise konkave Ausbildung der Schneidkanten das Schnittgut einfacher zwischen die Klingenelemente des oberen und des unteren Schneidmessers eingebracht werden kann. Ein besonderer Vorteil ergibt sich in der nachfolgenden Phase, in welcher das eingebrachte Schnittgut aufgrund der sich schliessenden Klingenelemente abgetrennt wird. Aufgrund der konkaven Ausbildung der Klingenelemente, verlaufen die Schneidkanten an den Schneidmesserspitzen nahezu parallel zueinander. Dadurch wird die Schnitteffizienz zusätzlich erhöht, weil Schnittgut nicht mehr nach vorn entweichen kann. Beispielsweise ist dieser Effekt am Beispiel einer klassischen Schere nachvollziehbar. Wenn die beiden Schneidkanten vollständig geöffnet sind, dann wird das Schnittgut leicht in Richtung der Schneidmesserspitzen der Schere verschoben. Dies hängt insbesondere mit dem weit geöffneten Winkel der Schneidkanten zusammen, weil Schnittgut nicht zwischen den Schneidkanten geklemmt und geschnitten wird sondern aufgrund der sich schliessenden Schneidkanten in Richtung der Schneidmessersitzen verschoben wird. Durch die konkave Ausbildung der Schneidkanten wird Schnittgut früher geklemmt und geschnitten, wodurch insgesamt die Schnitteffizienz gesteigert wird.

Nach einer bevorzugten Ausführungsform sind die konkav ausgebildeten Schneidkanten im Bereich der Schneidmesserspitze parallel zueinander ausgebildet. Dadurch wird beispielsweise der technische Vorteil erreicht, dass die Schnitteffizienz zusätzlich erhöht wird. Es kommen ähnliche Effekte wie in der vorausgehenden Ausführungsform zum Tragen, wobei das Schnittgut aufgrund des parallelen Abschnitts an den Schneidmesserspitzen gar nicht mehr entweicht und das Schnittgut somit vollständig geschnitten werden kann.

Gemäss einer weiteren Ausführungsform sind die Klingenelemente über den Messerrücken miteinander verbunden ausgebildet. Aufgrund der Verbundenheit der Klingenelemente über den Messerrücken, wird eine Auswechselbarkeit des oberen Schneidmessers und des unteren Schneidmessers deutlich vereinfacht. Beispielsweise sind die Klingenelemente und der Messerrücken einstückig ausgebildet. Durch die einstückige Ausbildung werden die Masse und die Dicke des oberen Schneidmessers und des unteren Schneidmessers erheblich reduziert. Die reduzierte Masse ermöglicht hierbei eine Verschleissreduzierung, wodurch die Lebensdauer der Mähmesservorrichtung erhöht wird. Die reduzierte Dicke des oberen Schneidmessers und des unteren Schneidmessers verbessert das Abgleiten von Schnittgut im Betrieb der Mähmesservorrichtung Sämtliche Kanten werden durch Materialaufdickung des Messerrückens, wie sie beispielsweise durch angenietete oder aufgeschweisste Klingenelemente entstehen, eliminiert.

Nach einer besonders bevorzugten Ausführungsform erstrecken sich die Schneidkante eines ersten Klingenelements und die gegenüberliegende Schneidkante eines benachbarten Klingenelements kontinuierlich über den Messerrücken. Dadurch wird beispielsweise der Vorteil erreicht, dass die Schneidkanten durchgehend ausgebildet sind und es keine Totl<anten mehr gibt. Dies erhöht die Effizienz der Mähmesservorrichtung erheblich. Insbesondere ist diese Ausführungsform im Zusammenhang mit einer Ausführungsform vorteilhaft, nach welcher die Klingenelemente und der Messerrücken als einstückig ausgebildete Klinge, insbesondere aus einem Flachstahl gefertigt, ausgebildet sind. Durch die besonders flache Ausführung der einstückigen Klinge können die kontinuierlich ausgebildeten Schneidkanten besonders leicht vollständig geschliffen und geschärft werden.

Gemäss einer besonderen Ausführungsform ist der sich kontinuierlich über den Messerrücken erstreckende Abschnitt der Schneidkante parallel zu einer Längsachse des Messerrückens ausgebildet. Dadurch wird beispielsweise der technische Vorteil erreicht, dass die Schnitteffizienz zusätzlich verbessert wird. Insgesamt kann mehr Schnittgut zwischen die Klingenelemente des oberen und des unteren Schneidmessers eingebracht werden.

Nach einer besonders vorteilhaften Ausführungsform schneiden sich die voneinander weggerichtet angeordneten konkaven Schneidkanten jeden Klingenelements mit dem parallel zur Längsachse kontinuierlich über den Messerrücken erstreckenden Abschnitt der Schneidkante in einem Winkel α grösser 90° und kleiner 135°. Dadurch ergibt sich eine besonders funktionsfähige Konstellation, welche einerseits die Aufnahme von viel Schnittgut zwischen die Klingenelemente des oberen und des unteren Schneidmessers ermöglicht. Andererseits wird die Schnitteffizienz aufgrund der konkaven Ausbildung der Schneidkanten gesteigert.

Nach einer weiteren besonders vorteilhaften Ausführungsform ist der Winkel α grösser 100° und kleiner 130°. Dadurch wird die Schnitteffizienz zusätzlich gesteigert.

Eine besonders hohe Ausprägung der Schnitteffizienz ergibt sich aufgrund einer verbesserten Ausführungsform, nach welcher der Winkel α grösser 110° und kleiner 120° ist.

Gemäss einer besonders vorteilhaften Ausbildung sind die Klingenelemente und der Messerrücken als gemeinsames integrales Bauteil ausgebildet. Dadurch ergibt sich der weitere Vorteil, dass die integrale einstückige Ausbildung der Klingenelemente das Schleifen und Schärfen der einzelnen Klingenelemente verbessert. Materialaufdickungen des Messerrückens, wie sie durch angenietete oder aufgeschweisste Klingenelemente entstehen, erschweren die Zugänglichkeit zu den Klingenelementen, um diese regelmäßig zu schleifen und zu schärfen. Somit wird die Instandsetzung vereinfacht und die Handhabung verbessert.

Nach einer weiteren Ausführungsform weist die Mähmesservorrichtung einen auswechselbaren Messerkopf zum Einleiten einer Antriebsbewegung eines seitlichen Antriebs auf das Doppelmesser-Schneidsystem auf. Dadurch ergibt sich beispielsweise der technische Vorteil, dass zum Zweck des Austausches des oberen Schneidmessers oder des unteren Schneidmessers der Messerkopf vollständig entfernt werden kann. Dies vereinfacht den Aufwand beim Wechseln der Schneidmesser. Ein besonderer Vorteil ergibt sich erneut beim Schleifen der Klingenelemente. Durch das vollständige Entfernen des Messerkopfes wird die Zugänglichkeit zu den Klingenelementen, um diese zu schleifen und zu schärfen, erleichtert. Somit wird die Einsatzdauer erhöht und die Instandsetzung sowie die Handhabung verbessert. Des Weiteren ergeben sich dadurch Kosteneinsparungen.

Um die Einsatzdauer der Mähmesservorrichtung zu erhöhen und den Verschleiss zu reduzieren, weist der Messerkopf einen elastischen Abschnitt auf, welcher zwischen einem Verbindungsabschnitt des Messerkopfs mit dem Messerrücken und einem Anschluss zum Antrieb ausgebildet ist.

Im Betrieb der Mähmesservorrichtung kommt es beispielsweise durch Steine oder andere Gegenstände dazu, dass die Schneidmesser starken mechanischen Belastungen wie Schlägen oder Deformationen ausgesetzt sind. Ein steifer unflexibler Messerkopf als Verbindung zwischen Schneidmesser und seitlich angebundenem Antrieb belastet alle Bestandteile der Wirkungskette zumindest mechanisch. Dies erhöht zusätzlich den Verschleiss der gesamten Mähmesservorrichtung und verkürzt deren Lebensdauer deutlich. Der elastische Abschnitt des Messerkopfs kann hierbei insbesondere Schwingungen und Deformationen dämpfen, wodurch eine Entlastung der Mähmesservorrichtung bewirkt wird. Somit steigert der elastische Abschnitt die Einsatzdauer.

Nach einer besonders bevorzugten Ausführungsform ist der elastische Abschnitt aus einem Metall hergestellt. Metall hat eine geeignete Festigkeit und kann gleichzeitig die notwendige Elastizität aufweisen. Beispielsweise ist der elastische Abschnitt aus einem Federstahl hergestellt. Alternativ ist es jedoch ebenso denkbar, den elastischen Abschnitt aus einem Kunststoff oder einem anderen geeignete Material herzustellen.

Gemäss einer besonders bevorzugten Ausführungsform ist der elastische Abschnitt zum Dämpfen einer Bewegung in einer Ebene ausgebildet, welche parallel zu der durch die 1<lingenelemente des oberen Schneidmessers oder des unteren Schneidmessers definierten Ebene ausgebildet ist. Dadurch wird beispielsweise der technische Vorteil erreicht, dass mechanische Einflüsse, wie beispielsweise Schläge oder Vibrationen, welche im Betrieb von einer Vorderseite auf die Schneidmesser einwirken, reduziert und gedämpft werden können.

Eine fünfte Lösung der Aufgabe ist nachfolgend beschrieben. Die fünfte Lösung kann als eine eigene Erfindung betrachtet werden, die unabhängig von den anderen Lösungen der Aufgabe besteht.

Die fünfte Lösung betrifft eine Mähmesservorrichtung mit einem Doppelmesser-Schneidsystem, wobei das Doppelmesser-Schneidsystem ein oberes Schneidmesser und ein unteres Schneidmesser umfasst. Das obere Schneidmesser und das untere Schneidmesser sind mittels eines einseitigen Antriebs relativ zueinander bewegbar ausgebildet. Zumindest das obere Schneidmesser oder das untere Schneidmesser umfasst jeweils mehrere Klingenelemente, die über einen Messerrücken miteinander verbunden ausgebildet sind. Die Mähmesservorrichtung weist einen auswechselbaren Messerkopf zum Einleiten einer Antriebsbewegung eines seitlichen Antriebs auf das obere Schneidmesser auf, wobei dem Messerkopf ein Federelement zugeordnet ist, um eine Relativbewegung zwischen einem Antrieb und dem Messerkopf zu dämpfen.

Dadurch wird beispielsweise der technische Vorteil erreicht, dass ein bedeutender Bestandteil der durch den Antrieb auf das obere Schneidmesser aufgebrachten Schwingungen gedämpft wird. Derartige Antriebe umfassen meist Exzenter, welche Bewegungen und Schwingungen bei den Schneidmessern erzeugen, die senkrecht zur Schneidmesserebene ausgerichtet sind. Beispielsweise wird dadurch das exakte Zusammenspiel von oberem Schneidmesser und unterem Schneidmesser negativ beeinflusst, was wiederrum den Verschleiss fördert und somit die Lebensdauer der Mähmesservorrichtung verkürzt.

Ein weiterer Vorteil ergibt sich durch eine vereinfachte Demontage und Reparatur eines Schneidmessers. Aufgrund des Federelements muss der Anschluss des Antriebs weniger präzise auf das Schneidmesser eingestellt werden. Mit anderen Worten kann das Federelement Ungenauigkeiten des Antriebs kompensieren, wodurch eine deutliche Effizienzsteigerung und Aufwandsreduzierung beim Wechsel eines Schneidmessers erreicht werden kann. Dadurch werden die Montagezeiten reduziert und die Stehzeit einer Mähmesservorrichtung wird minimiert.

Nach einer bevorzugten Ausführungsform ist das Federelement zwischen Messerkopf und dem oberen Schneidmesser angeordnet. Dadurch wird beispielsweise der technische Vorteil erreicht, dass eine Klemmkraft die vom Antrieb auf den Messerkopf aufgebracht wird, unmittelbar auf das obere Schneidmesser übertragen wird. Ein weiterer Vorteil besteht darin, dass das Federelement direkt am oberen Schneidmesser befestigt werden kann.

Gemäss einer weiteren Ausführungsform ist das Federelement zum Dämpfen einer Bewegung in einer Ebene ausgebildet, welche orthogonal zu der durch die 1<lingenelemente des oberen Schneidmessers oder des unteren Schneidmessers definierten Ebene ausgebildet ist. Dadurch besteht beispielsweise der Vorteil, dass der Verschleiss der Mähmesservorrichtung zusätzlich reduziert und die Einsatzdauer gesteigert werden kann.

Dies gilt insbesondere im Zusammenhang mit einer Ausführungsform, welche einen Messerkopf mit einem elastischen Abschnitt aufweist, welcher zwischen einem Verbindungsabschnitt des Messerkopfs mit dem Messerrücken und einem Anschluss zum Antrieb ausgebildet ist. Im Betrieb der Mähmesservorrichtung kommt es beispielsweise durch Steine oder andere Gegenstände dazu, dass die Schneidmesser starken mechanischen Belastungen wie Schlägen oder Deformationen ausgesetzt sind. Ein steifer unflexibler Messerkopf als Verbindung zwischen Schneidmesser und seitlich angebundenem Antrieb belastet alle Bestandteile der Wirkungskette zumindest mechanisch. Dies erhöht zusätzlich den Verschleiss der gesamten Mähmesservorrichtung und verkürzt deren Lebensdauer deutlich.

Der elastische Abschnitt des Messerkopfs kann hierbei insbesondere Schwingungen und Deformationen dämpfen, wodurch eine Entlastung der Mähmesservorrichtung bewirkt wird. Somit steigert der elastische Abschnitt die Einsatzdauer. Die identischen Vorteile gelten auch in Verbindung mit dem Federelement zum Dämpfen einer Bewegung in einer Ebene ausgebildet, welche orthogonal zu der durch die 1<lingenelemente des oberen Schneidmessers oder des unteren Schneidmessers definierten Ebene ausgebildet ist. Somit können Bewegungen in zwei zueinander orthogonalen Ebenen gedämpft werden, was den Verschleiss der gesamten Mähmesservorrichtung zusätzlich reduziert und die Lebensdauer deutlich erhöht.

Nach einer besonders bevorzugten Ausführungsform weist das Federelement eine Blattfeder auf. Dadurch wird beispielsweise der technische Vorteil erreicht, dass Blattfedern geringe Kosten und eine hohe Lebensdauer aufweisen.

Um die Einsatzdauer der Mähmesservorrichtung zu erhöhen und den Verschleiss zu reduzieren, weist der Messerkopf einen elastischen Abschnitt auf, welcher zwischen einem Verbindungsabschnitt des Messerkopfs mit dem Messerrücken und einem Anschluss zum Antrieb ausgebildet ist. Dadurch wird beispielsweise der technische Vorteil erreicht, dass der elastische Abschnitt des Messerkopfs hierbei insbesondere Schwingungen und Deformationen dämpfen kann, wodurch eine Entlastung der Mähmesservorrichtung bewirkt wird.

Dies gilt insbesondere im Zusammenhang mit einer Ausführungsform, bei der das Federelement zum Dämpfen einer Bewegung in einer Ebene ausgebildet, welche orthogonal zu der durch die 1<lingenelemente des oberen Schneidmessers oder des unteren Schneidmessers definierten Ebene ausgebildet ist. Somit können Bewegungen in zwei zueinander orthogonalen Ebenen gedämpft werden, wodurch der Verschleiss der gesamten Mähmesservorrichtung reduziert und die Lebensdauer deutlich erhöht wird.

Gemäss einer besonders bevorzugten Ausführungsform ist der elastische Abschnitt zum Dämpfen einer Bewegung in einer Ebene ausgebildet, welche parallel zu der durch die Klingenelemente des oberen Schneidmessers oder des unteren Schneidmessers definierten Ebene ausgebildet ist. Dadurch wird beispielsweise der technische Vorteil erreicht, dass mechanische Einflüsse, wie beispielsweise Schläge oder Vibrationen, welche im Betrieb von einer Vorderseite auf die Schneidmesser einwirken, reduziert und gedämpft werden können.

Nach einer besonders bevorzugten Ausführungsform ist der elastische Abschnitt aus einem Metall hergestellt. Metall hat eine geeignete Festigkeit und kann gleichzeitig die notwendige Elastizität aufweisen. Beispielsweise ist der elastische Abschnitt aus einem Federstahl hergestellt. Alternativ ist es jedoch ebenso denkbar, den elastischen Abschnitt aus einem Kunststoff oder einem anderen geeignete Material herzustellen.

Gemäss einer weiteren bevorzugten Ausführungsform ist das obere Schneidmesser mittels einer oberen Haltevorrichtung mit einem Messerbalken verbunden ausgebildet, wobei die obere Haltevorrichtung mittels einer Führungsbuchse an dem Messerbalken gelagert und innerhalb der Führungsbuchse eine vorgespannte Zugfeder zum Bewirken einer Anpresskraft des oberen Schneidmessers auf das untere Schneidmesser angeordnet ist. Dadurch wird beispielsweise der technische Vorteil erreicht, dass die Zugfeder ausschliesslich auf Zug beansprucht wird. Dadurch wird die Anpresskraft des oberen Schneidmessers auf das untere Schneidmesser nicht durch eine Kippbewegung der Haltevorrichtung erzeugt, sondern durch eine reine Zugbewegung der Haltevorrichtung übertragen, wobei die Wirkrichtung der Anpresskraft parallel zur Längsrichtung der Führungsbuchse ausgebildet ist. Dadurch wird der Verschleiss der Schneidmesser deutlich reduziert, da die Anpresskraft gleichmässig verteilt wird. Zusätzlich bringt dies den Vorteil mit sich, dass ein Wechsel des Schneidmessers mit geringerem Aufwand möglich ist, da eine Demontage der Haltevorrichtung nur wenig Aufwand erzeugt.

Ein weiterer bedeutender Vorteil der erfindungsgemässen Vorrichtung liegt in der mechanischen Belastung der Mähmesser im Betrieb begründet. Häufig wird das obere Schneidmesser durch Steine nach oben weggedrückt oder durch Verunreinigungen zwischen dem oberen Schneidmesser und dem unteren Schneidmesser stark deformiert. Diese Deformationen belasten die Schneidmesser zusätzlich und erhöhen den Verschleiss. Aufgrund der in der Führungsbuchse gelagerten Feder, kann die Haltevorrichtung der Anpresskraft entgegengerichtet nachgeben, wodurch die Verunreinigungen selbstständig entfernt werden und keinen dauerhaften Verschleiss an den Schneidmessern bewirken können. Dies verlängert die Nutzungszeit der Mähmesservorrichtung, da der Verschleiss zusätzlich reduziert wird.

Nach einer bevorzugten Ausführungsform ist die Führungsbuchse in einer Gewindebuchse gehalten. Dadurch wird beispielsweise der technische Vorteil erreicht, dass die Führungsbuchse gegen Verunreinigungen geschützt angeordnet werden kann und eine geeignete Krafteinleitung von der Haltevorrichtung über die Führungsbuchse auf die Gewindebuchse erfolgen kann.

Gemäss einer weiteren Ausführungsform ist die Gewindebuchse über ein Aussengewinde mit dem Messerbalken verschraubbar ausgebildet. Dadurch wird der zusätzliche Vorteil erreicht, dass die Gewindebuchse eine zuverlässige Krafteinleitung in den Messerbalken sicherstellt. Des Weiteren ist es möglich, die Gewindebuchse ohne gesteigerten Montageaufwand zu demontieren oder zu wechseln. Zusätzlich kann mittels des Gewindes die absolute Position der Gewindebuchse relativ zum Messerbalken verändert werden. Dies kann beispielsweise nach einem Schneidmesserwechsel zur präzisen Einstellung der Mähmesservorrichtung vorteilhaft sein.

Gemäss einer weiteren vorteilhaften Ausführungsform ist die Zugfeder mittels einer Federschraube spannbar ausgebildet. Dadurch wird beispielsweise der technische Vorteil erreicht, dass die Spannung und somit die Zugkraft der Feder einstellbar ausgebildet ist. Insbesondere lässt sich die Spannung je nach Bedarf durch Betätigung der Federschraube erhöhen oder reduzieren. Beispielsweise kann dies nach einem Wechsel der Mähmesser vorteilhaft sein, um die optimale Einstellung der Mähmesservorrichtung sicherzustellen. Zudem ist es möglich, die Spannung der Zugfeder und damit die Anpresskraft des oberen Schneidmessers auf das untere Schneidmesser für einen bestimmten Einsatzzweck zu variieren.

Um die Anpresskraft des oberen Schneidmessers auf das untere Schneidmesser zu verändern, ist die Federschraube über einen Buchsendeckel von außen einstellbar ausgebildet. Der Buchsendeckel ist besonders einfach zu betätigen. Ein spezielles Werkzeug ist nicht zwingend notwendig. Beispielsweise kann der Buchsendecl<el manuell oder mittels eines einfachen handelsüblichen Werkzeugs betätigt werden. Insbesondere sind ein Schraubenzieher, ein Inbusschlüssel, ein Ring- oder Maulschlüssel hierfür geeignet.

Nach einer zusätzlichen Ausführungsform ist das obere Schneidmesser einschließlich den Kingenelementen und dem Messerrücken als einstückig ausgebildete Klinge, insbesondere aus einem Flachstahl gefertigt, ausgebildet. Die Ausbildung aus einem Flachstahl ist hierbei besonders preiswert in der Herstellung. Zusätzlich ist die Ausbildung aus Flachstahl mit Gewichtseinsparungen verbunden, welche sich wiederum verschleissreduzierend und damit positiv auf die Lebensdauer der Mähmesservorrichtung auswirken. Zusätzlich oder alternativ kann auch das untere Schneidmesser einschließlich den Klingenelementen und dem Messerrücken als einstückig ausgebildete Klinge, insbesondere aus einem Flachstahl gefertigt, ausgebildet sein.

Gewöhnlich ist eine Vielzahl an Schneidmessern seriell entlang des Messerbalkens angeordnet, wobei meist jedem oberen Schneidmesser ein unteres Schneidmesser zugeordnet ist. Nach einer besonderen Ausführungsform sind entlang des Messerbalkens eine Vielzahl oberer Schneidmesser und unterer Schneidmesser angeordnet, wobei jedem dritten oberen Klingenelement des oberen Schneidmessers eine obere Haltevorrichtung zugeordnet ist. Dadurch wird beispielsweise der technische Vorteil erreicht, dass eine kontinuierliche Kraftverteilung auf alle Klingenelemente entlang des Messerbalkens sichergestellt werden kann. Dadurch wird der Verschleiss reduziert und die Einsatzdauer der erfindungsgemässen Vorrichtung zusätzlich erhöht.

Eine sechste Lösung der Aufgabe ist nachfolgend beschrieben. Die sechste Lösung kann als eine eigene Erfindung betrachtet werden, die unabhängig von den anderen Lösungen der Aufgabe besteht.

Die sechste Lösung betrifft eine Mähmesservorrichtung mit einem im Wesentlichen horizontal angeordneten Messerbalken mit mindestens einem Schneidmesser, welches über einen Antrieb in eine Hin- und Herbewegung versetzbar ist, sowie zwei Laufschuhen, die in Längsrichtung des Messerbalkensim Bereich von dessen Enden angeordnet sind. Jeder Laufschuh weist ein Schwadrad auf, welches im Wesentlichen in vertikaler Richtung angeordnet und drehbar ausgebildet ist.

Die Mähmesservorrichtung wird auch als Mähwerk bezeichnet und verfügt vorzugsweise über weitere Elemente, wie z.B. einem Verbindungsarm, mit denen die Mähmesservorrichtung mit einem Fahrzeug verbunden ist oder mit diesem verbunden werden kann. Eine derartige Verbindung ist vorzugsweise lösbar ausgebildet. Die Mähmesservorrichtung ist insbesondere derart ausgestaltet, dass dieses mit einem Dreipunkt-Kraftheber eines Traktors verbunden werden kann. Die Mähmesservorrichtung kann jedoch auch als fester Bestandteil eines Fahrzeugs ausgestaltet sein.

Die Mähmesservorrichtung kann zu Mähen von unterschiedlichem Schnittgut eingesetzt werden, insbesondere für Gräser und Getreide.

Unter der horizontalen Anordnung des Messerbalkens, welcher auch als Mähbalken bezeichnet wird, wird in der vorliegenden Anmeldung verstanden, dass der Messerbalken bzw. dessen Längsachse im Wesentlichen parallel zum Boden ausgerichtet ist, auf welchem die Mähmesservorrichtung bzw. ein Fahrzeug, dessen Bestandteil die Mähmesservorrichtung ist oder mit dem die Mähmesservorrichtung verbunden ist, steht. Dementsprechend ist auch das mindestens eine Schneidmesser oder auch als Messerschiene bezeichnet in horizontaler Richtung angeordnet.

Vorzugsweise ist der Messerbalken derart an einem Fahrzeug angebracht oder verbindbar, dass die Längsachse des Messerbalkensin einem rechten Winkel zur Fahrtrichtung des Fahrzeugs liegt. Die Fahrtrichtung des Fahrzeugs legt somit die Mährichtung fest, wobei diese in Richtung der Vorwärts- oder der Rückwärtsfahrt des Fahrzeugs festgelegt ist. Vorzugsweise entspricht die Mährichtung der Richtung der Vorwärtsfahrt des Fahrzeugs.

Das Fahrzeug ist vorzugsweise ein landwirtschaftliches Fahrzeug, insbesondere ein Traktor, ein Geräteträger oder ein motorisierter Einachser.

Die Mähmesservorrichtung umfasst ein Doppelmesser-Schneidsystem, wobei das Doppelmesser-Schneidsystem ein oberes Schneidmesser und ein unteres Schneidmesser umfasst, welche mittels eines einseitigen Antriebs relativ zueinander bewegbar ausgebildet sind.

Jedes Schneidmesser umfasst vorzugsweise eine Vielzahl an im Wesentlichen dreieckigen Klingenelemente, welche in Mährichtung von dem Schneidmesser sowie dem Messerbalken abstehen. Der Messerbalken umfasst ferner eine ruhende Gegenklinge oder ein zweites Schneidmesser. Durch die vom Antrieb verursachte Hin- und Herbewegung können die Klingenelemente das Schnittgut zwischen der mindestens einen oberen Schneidmesser und der Gegenklinge oder dem unteren Schneidmesser mähen. Das obere Schneidmesser definiert daher die Schneidebene der Mähmesservorrichtung. Diese Schneidebene ist vorzugsweise über Einstellmittel in vertikaler Richtung verstellbar, womit die Höhe, in welcher das Schnittgut gemäht wird, eingestellt werden kann. Dies kann vorzugsweise durch eine Hebevorrichtung, mit welcher die Mähmesservorrichtung relativ zum Fahrzeug in vertikaler Richtung bewegt werden kann, realisiert werden.

Der Messerbalken umfasst vorzugsweise Befestigungsmittel, an denen sich das mindestens eine Schneidmesser insbesondere lösbar befestigen lässt. Die Befestigung ist derart ausgestaltet, dass das mindestens eine Schneidmesser in Längsrichtung des Messerbalkenslinear verschiebbar gelagert ist, damit diese relativ zum Messerbalken hin und her bewegt werden kann.

Das mindestens eine Schneidmesser weist vorzugsweise dieselbe Länge wie der Messerbalken auf. Alternativ bevorzugt kann das mindestens eine Schneidmesser jedoch auch länger sein als der Messerbalken, das heisst, dass das mindestens eine Schneidmesser den Mähbalken beidseits überragen kann.

Die Laufschuhe sind vorzugsweise in Längsrichtung des Messerbalkens jeweils an einem Ende angeordnet. Alternativ können die Laufschuhe jedoch auch in einem Abstand von den Enden des Messerbalkens angeordnet sein. Dieser Abstand sollte jedoch möglichst klein sein, insbesondere nicht grösser als 5% der Länge des Messerbalkens.

Das Leitblech erstreckt sich vorzugsweise von der Schneidebene in vertikaler Richtung bis über den Messerbalken hinaus. Weiter bevorzugt erstreckt sich das Leitblech in vertikaler Richtung bis zur Schneidebene. Das Leitblech erstreckt sich in Mährichtung vor dem Messerbalken. Dadurch kann jedes Leitblech in Mährichtung das Schnittgut im Bereich der Enden des Messerbalkens aufteilen, so dass in Mährichtung vor dem Messerbalken befindliches Schnittgut zum Messerbalken hin gerichtet wird, während in Mährichtung nicht vor dem Messerbalken befindliches Schnittgut von diesem weg geleitet wird.

Das Schwadrad wird beispielsweise auch als Grastrennscheibe bezeichnet. Beispielsweise wird dadurch der technische Vorteil erreicht, dass durch die Drehung des Schwadrades Halme des Schnittguts parallel zur Mährichtung ausgerichtet werden können, was zu besseren Schnittergebnissen führt. Das Schwadrad ist vorzugsweise als Scheibe ausgestaltet, welche über ein Wälzlager mit dem Laufschuh verbunden ist.

Nach einer bevorzugten Ausführungsform ist zumindest ein Schwadrad derart am Laufschuh angeordnet, dass ein unterer Scheitelpunkt des Schwadrades in vertikaler Richtung unterhalb der Schneidebene des mindestens einen Schneidmessers liegt. Das Schwadrad ist vorzugsweise derart angeordnet, dass das Schwadrad am unteren Scheitelpunkt mit dem Boden in Berührung kommt, so dass das Schwadrad durch die Bewegung des Mähwerks in Mährichtung passiv gedreht wird. Die Drehrichtung des Schwadrades am unteren Scheitelpunkt ist somit der Mährichtung entgegengesetzt.

Alternativ kann das Schwadrad über einen Antrieb in Drehbewegung versetzt werden, insbesondere derart, dass das Schwadrad am dessen unterem Scheitelpunkt eine Drehrichtung aufweist, die der Mährichtung entgegengesetzt ist.

Gemäss einer weiteren Ausführungsform verfügt das Schwadrad am Umfang über eine Verzahnung, wobei jeder Zahn über eine bogenförmig ansteigende lange Flanke sowie über eine im Wesentlichen rechtwinklig abfallende Flanke verfügt, wobei das Schwadrad derart am Laufschuh angeordnet ist, dass am unteren Scheitelpunkt der Drehung die kurze Flanke in Mährichtung zeigt.

Nach einer besonders bevorzugten Ausführungsform ist das Schwadrad in einer Vertikalrichtung verstellbar ausgebildet.

Dadurch wird beispielsweise der technische Vorteil erreicht, dass sich das Schwadrad den Gegebenheiten des Bodens anpassen kann. Dadurch kann die Ausrichtung des Schnittguts parallel zur Mährichtung zusätzlich verbessert werden, was zu besseren Schnittergebnissen führt.

Darauf aufbauend ist die Verstellbarl<eit in der Vertikalrichtung zur selbstständigen Anpassung des Schwadrades an eine Bodenoberfläche im Betrieb der Mähmesservorrichtung ausgebildet.

Gemäss einer vorteilhaften Ausführungsform ist das Schwadrad über einen Pendelarm an dem Laufschuh gelagert. Dadurch wird beispielsweise der technische Vorteil erreicht, dass die vertikale Bewegung des Schwadrades über eine mechanisch verschleissfreie aber einfache Lösung erfolgt.

Nach einer zusätzlichen bevorzugten Ausführungsform ist der Pendelarm zwischen einem ersten Anschlag und einem zweiten Anschlag bewegbar ausgebildet. Dadurch wird beispielsweise der technische Vorteil erreicht, dass für das Schwadrad ein vertikales Bewegungsintervall definiert ist. Durch den oberen Anschlag und den unteren Anschlag kann beispielsweise auch das Schwadrad in Abhängigkeit des Einsatzzwecks gewechselt werden. Insbesondere kann sich dadurch die Grösse des Schwadrads ändern ohne dass der obere und der untere Anschlag angepasst werden müssen.

Gemäss einer weiteren Ausführungsform definieren der erste Anschlag und der zweite Anschlag ein Winkelintervall von maximal 90°. Dadurch wird beispielsweise der technische Vorteil erreicht, dass in Abhängigkeit der Länge des Pendelarms ein konkretes Intervall der vertikalen Anpassung definiert werden kann.

Nach einer darauf aufbauenden Ausführungsform ist das Winkelintervall von einem Lager des Pendelarms am Laufschuh in Richtung des Messerbalkens ausgerichtet.

Gemäss einer weiteren vorteilhaften Ausführungsform sind der erste Anschlag oberhalb und der zweite Anschlag unterhalb einer zum Messerbalken parallelen und durch das Lager des Pendelarms am Laufschuh verlaufenden Ebene angeordnet.

Um die Anzahl der Bauteile zu reduzieren sind der erste Anschlag und/ oder der zweite Anschlag unmittelbar am Laufschuh angeordnet. Dadurch wird zusätzlich der technische Vorteil erreicht, dass auch starke Stösse des Schwadrades über den Pendelarm direkt in die Struktur des Laufschuhs übertragen werden. Dadurch wird der Verschleiss zusätzlich reduziert und die Einsatzdauer der Mähmesservorrichtung wird erhöht.

Nach einer weiteren Ausführungsform weisen die Laufschuhe jeweils ein Leitblech auf, welches im Wesentlichen in vertikaler Richtung angeordnet ist und sich relativ zur Mährichtung vor und teilweise auch hinter dem Messerbalken erstrecken. Beispielsweise erstreckt sich das Leitblech in Mährichtung vor dem Messerbalken. Dadurch kann jedes Leitblech in Mährichtung das Schnittgut im Bereich der Enden des Messerbalkens aufteilen, so dass in Mährichtung vor dem Messerbalken befindliches Schnittgut zum Messerbalken hin gerichtet wird, während in Mährichtung nicht vor dem Messerbalken befindliches Schnittgut von diesem weg geleitet wird.

Gemäss einer weiteren Ausführungsform sind die Leitbleche in Mährichtung vorne weiter voneinander beabstandet, als im Bereich der Enden des Messerbalkens. Dadurch wird beispielsweise der technische Vorteil erreicht, dass die Leitbleche eine Art Trichter ausbilden, so dass das Schnittgut möglichst effizient zum Messerbalken bzw. dem mindestens einen Schneidmesser geleitet wird. Dabei stehen die Leitbleche der beiden Laufschuhe in einem Winkel relativ zur Mährichtung. Dieser Winkel beträgt vorzugsweise weniger als 45°, insbesondere weniger als 20°.

Nach einer besonders vorteilhaften Ausführungsform ist der Laufschuh nach unten offen ausgebildet. Mit anderen Worten verfügt der Laufschuh über eine Aussparung, in welcher jeweils ein Ende das mindestens eine Schneidmesser aufgenommen werden kann, wobei ein Abweiser, der in vertikaler Richtung von oben mindestens bis zu einer Schneidebene des mindestens einen Schneidmessers ragt, in Mährichtung in einem Abstand zum Schneidmesser am Leitblech angeordnet ist.

Im Bereich der Aussparung ist unterhalb des Schneidmessers keine weitere Komponente der Mähmesservorrichtung angeordnet, so dass zwischen dem Schneidmesser und dem Boden ein Freiraum vorliegt. Mit dem Abweiser können Halme des Schnittguts, welche in Mährichtung nicht direkt vor dem Messerbalken bzw. dem Schneidmesser liegen und nicht bereits durch die Leitbleche weggeleitet wurden, auf die Seite geschoben werden. Vorzugsweise erstreckt sich der Abweiser in vertikaler Richtung bis unter die Schneidebene.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: ein oberes Schneidmesser mit Messerkopf;
- Fig. 2: ein Doppelmesser-Schneidsystem mit Antrieb und oberer Haltevorrichtung;
- Fig. 3: eine Schnittdarstellung eines oberen Schneidmessers auf Höhe einer oberen Haltevorrichtung;
- Fig. 4: eine Schnittdarstellung eines unteren Schneidmessers auf Höhe einer unteren Haltevorrichtung;
- Fig. 5: eine schematische Darstellung eines oberen Schneidmessers mit Messerkopf;
- Fig. 6: eine Mähmesservorrichtung nach einer weiteren Ausführungsform;
- Fig. 7: die Mähmesservorrichtung nach der Ausführungsform in Fig.6 in einer Draufsicht;
- Fig. 8: eine Teilansicht der Mähmesservorrichtung nach der Ausführungsform in Fig.6;
- Fig. 9: eine Mähmesservorrichtung nach einer zusätzlichen Ausführungsform;
- Fig. 10: eine weitere Ausführungsform einer Mähmesservorrichtung;
- Fig. 11: eine alternative Darstellung einer Mähmesservorrichtung gemäss der Ausführungsform aus Fig. 10; und
- Fig. 12: eine zusätzliche Ausführungsform einer Mähmesservorrichtung;

Grundsätzlich sind in den Figuren gleiche Teile mit gleichen Bezugszeichen versehen.

### Wege zur Ausführung der Erfindung

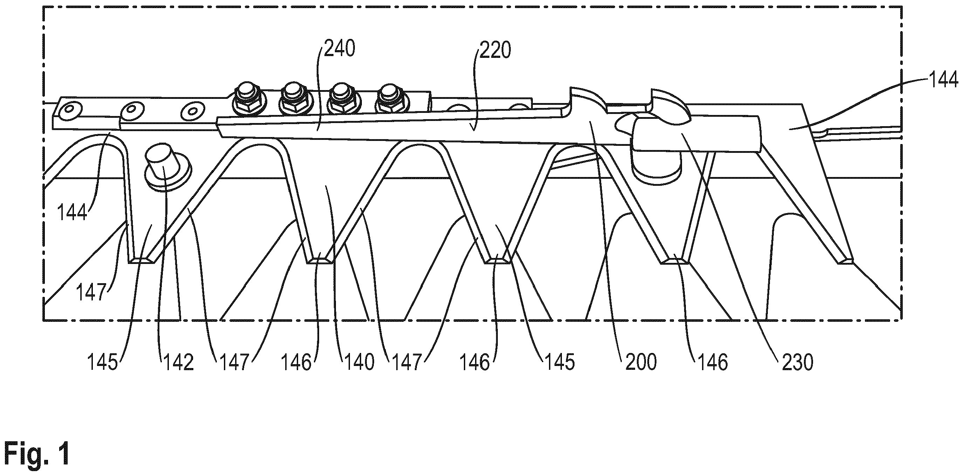

Die Figur 1 zeigt ein oberes Schneidmesser 140 mit Messerkopf 200. Das obere Schneidmesser 140 ist Bestandteil der Mähmesservorrichtung (nicht gezeigt), welche ein Doppelmesser-Schneidsystem (nicht gezeigt) mit dem oberen Schneidmesser 140 und einem unteren Schneidmesser (nicht gezeigt) umfasst. Das obere Schneidmesser 140 und das untere Schneidmesser 180 werden mittels eines Antriebs 114 relativ zueinander bewegt. Sowohl das obere Schneidmesser 140 als auch das untere Schneidmesser 180 haben jeweils mehrere Klingenelemente 145, die über einen Messerrücken 144, 184 miteinander verbunden ausgebildet sind. Somit sind die Klingenelemente 145 und der Messerrücken 144, 184 als gemeinsames integrales Bauteil ausgebildet. Beispielsweise werden Sie aus einem Flachstahl ausgestanzt, wodurch die Herstellung sehr preiswert ist. Zusätzlich umfasst die Mähmesservorrichtung 100 einen auswechselbaren Messerkopf 200, um eine Antriebsbewegung von einem seitlichen Antrieb (nicht gezeigt) auf das Doppelmesser-Schneidsystem 111 zu übertragen. Der Messerkopf 200 hat einen elastischen Abschnitt 220, welcher zwischen einem Verbindungsabschnitt 240 des Messerkopfs 200 mit dem oberen Schneidmesser 140 und einem Anschluss 230 zur Verbinden mit einem Antrieb ausgebildet ist.

Der gesamte Messerkopf 200 mit Verbindungsabschnitt 240, elastischem Abschnitt 200 und Anschluss 230 ist aus einem Stück gefertigt. Beispielsweise kann auch der Messerkopf aus einem Flachstahl hergestellt werden, wodurch auch der elastische Abschnitt 220 aus Metall hergestellt ist. Der elastische Abschnitt 220 kann insbesondere eine Dämpfungsfunktion in einer Ebene realisieren, welche parallel zu der durch die Klingenelemente 145 des oberen Schneidmessers 140 definierten Ebene ausgebildet ist.

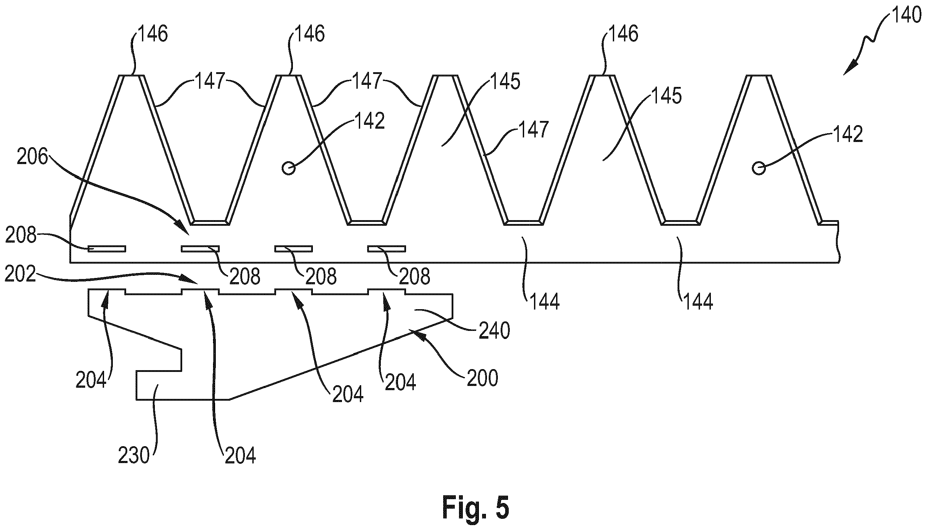

Der Verbindungsabschnitt 240 ist in der dargestellten Ausführungsform mittels Schrauben und Nieten an dem oberen Schneidmesser 140 fixiert. Zusätzlich umfasst der Verbindungsabschnitt 240 des Messerkopfs 200 ein Eingreifelement (nicht gezeigt), welches zum Eingreifen in eine korrespondierende Eingreifaufnahme (nicht gezeigt) im Messerrücken 144 des oberen Schneidmessers (140) vorgesehen ist. In der Beschreibung zu der Figur 5 wird hierzu detailliert eingegangen.

Wie bereits beschrieben, umfassen sowohl das obere Schneidmesser 140 als auch das untere Schneidmesser 180 jeweils mehrere Klingenelemente 145, die über den Messerrücken 144, 184 miteinander verbunden und als gemeinsames integrales Bauteil ausgebildet sind. Hierbei hat jedes Klingenelement 145 zwei V-förmig ausgebildete Schneidkanten 147. An einer Vorderseite jedes Klingenelements 145 ist die Schneidkante 147 durch eine abgeflachte Schneidmesserspitze 146 unterbrochen.

Die Schneidkante 147 eines ersten Klingenelements 145 und die gegenüberliegende Schneidkante 147 eines benachbarten Klingenelements 145 erstrecken sich kontinuierlich über den Messerrücken 144, 184, wodurch die Schneidkante 147 über den Messerrücken 144 durchgehend ausgebildet ist.

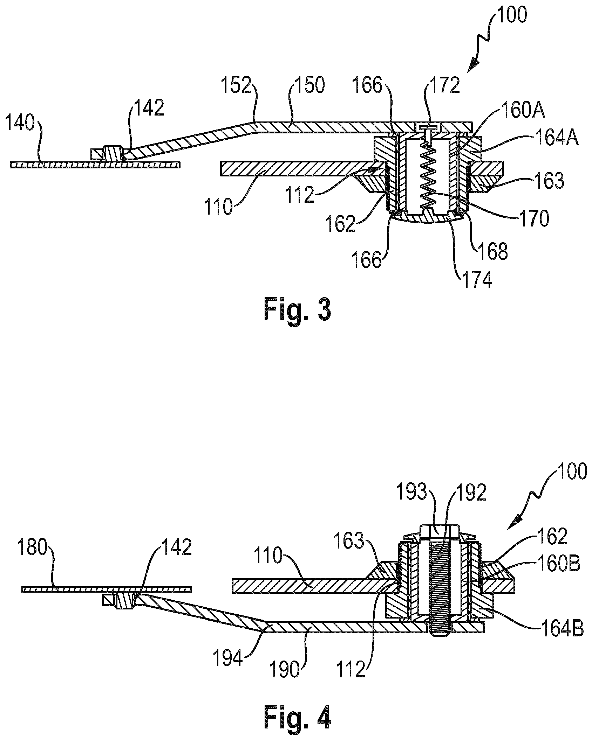

Auf einer Oberseite eines Klingenelements 145 befindet sich ein Schneidmesserlager 142 in Form eines Zapfens. Das Schneidmesserlager 142 dient der Verbindung des oberen Schneidmessers 140 mit einer oberen Haltevorrichtung 150. Die Funktion der oberen Haltevorrichtung 150 wird in der Figur 3 detailliert erläutert.

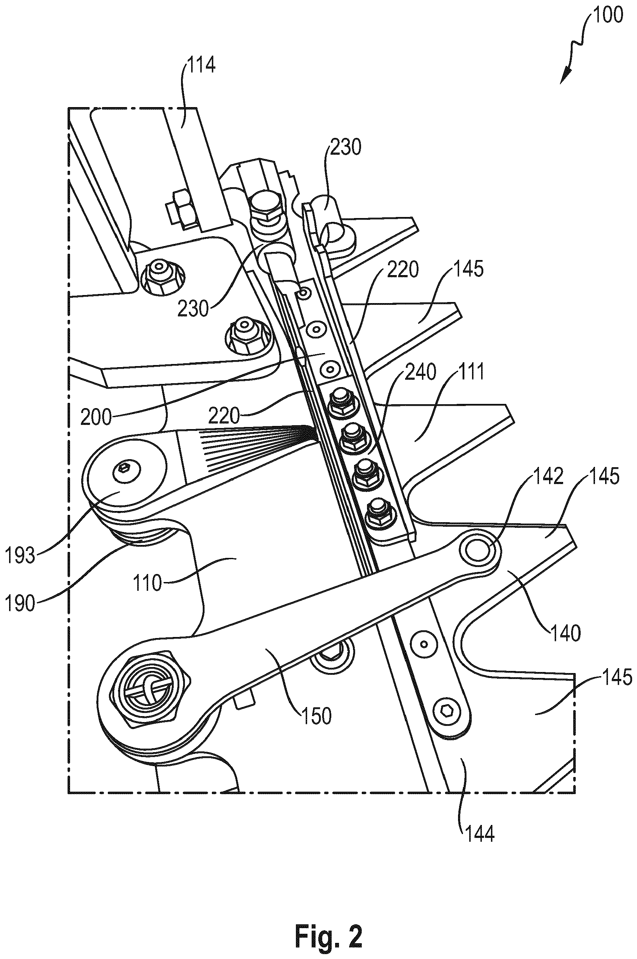

Die Figur 2 zeigt ein Doppelmesser-Schneidsystem 111 mit Antrieb 114 und oberer Haltevorrichtung 150. Die Mähmesservorrichtung 100 umfasst einen Messerbalken 110, welcher ein Doppelmesser-Schneidsystem 111 trägt. Das Doppelmesser-Schneidsystem 111 umfasst das obere Schneidmesser 140 und das untere Schneidmesser 180 (nicht gezeigt), Im Betrieb werden das obere Schneidmesser 140 und das untere Schneidmesser 180 mittels eines Antriebs 114, beispielsweise ein einseitig ausgebildeter Kurbelwellenantrieb, relativ zueinander bewegt.

Das obere Schneidmesser 140 ist mittels einer oberen Haltevorrichtung 150 mit dem Messerbalken 110 verbunden. Die obere Haltevorrichtung 150 ist an dem Messerbalken 110 gelagert. Eine Führungsbuchse (nicht gezeigt) lässt die notwendige Beweglichkeit der oberen Haltevorrichtung 150 gegenüber dem Messerbalken 110 zu, die während des Betriebs der Mähmesservorrichtung 100 durch die Relativbewegung des Doppelmesser-Schneidsystems 111 auftritt.

Neben der oberen Haltevorrichtungen 150 befindet sich eine untere Haltevorrichtung 190 mit einem leicht zugänglichen Schraubenkopf 193, welcher mit einer Schraube 192 (nicht gezeigt) verbunden ist. Die Schraube 192 dient dem Fixieren der unteren Haltevorrichtung 190 an dem Messerbalken 110. Die untere Haltevorrichtung 190 verbindet das untere Schneidmesser 180 mit dem Messerbalken 110.

Sowohl das obere Schneidmesser 140 als auch das untere Schneidmesser 180 sind jeweils über einen auswechselbaren Messerkopf 200 mit dem Antrieb 114 verbunden.

Jeder der beiden Messerköpfe 200, also der Messerkopf 200 des oberen Schneidmessers 140 und der Messerkopf 200 des unteren Schneidmessers 180, hat einen elastischen Abschnitt 220, welcher zwischen einem Verbindungsabschnitt 240 des Messerkopfs 200 mit dem Schneidmesser 140, 180 und einem Anschluss 230 zur Verbindung mit dem Antrieb 114 angeordnet ist.

Die Figur 3 zeigt eine erfindungsgemässe Mähmesservorrichtung 100 in einer Schnittansicht auf Höhe der oberen Haltevorrichtung 150 nach einer beispielhaften Ausführungsform. Die Mähmesservorrichtung 100 umfasst den Messerbalken 110 und das Doppelmesser-Schneidsystem 111, wobei das Doppelmesser-Schneidsystem 111 das obere Schneidmesser 140 und das untere Schneidmesser 180 (nicht gezeigt) umfasst. Das obere Schneidmesser 140 ist mittels der oberen Haltevorrichtung 150 mit dem Messerbalken 110 verbunden.

Die obere Haltevorrichtung 150 ist hierbei über eine Führungsbuchse 160A an dem Messerbalken 110 gelagert. Die Führungsbuchse selbst ist in einer Gewindebuchse 164A angeordnet, welche wiederum über ein Aussengewinde 162 mit dem Messerbalken 110 verschraubbar ausgebildet ist. Zum Verschrauben der Gewindebuchse 160A wird diese durch die Aufnahme 112 im Messerbalken 110 hindurch geführt. Durch eine Kontermutter 163 ist die Verschraubung der Gewindebuchse 164A zusätzlich abgesichert. Innerhalb der Gewindebuchse 164A befindet sich ein Lager 166, welches die Führungsbuchse 160A nahezu reibungsarm sowohl für eine rotatorische als auch für eine translatorische Bewegung gegenüber der Gewindebuchse 164A lagert. Das Lager 166 ist sowohl an der Oberseite als auch der Unterseite der Gewindebuchse 164A ausgebildet, wodurch verschiedene Lagerfunktionen realisierbar sind. Die rotatorische Lagerungskomponente, welche aufgrund der Bewegung der oberen und der unteren Schneidmesser 140, 180 zueinander erzeugt wird, lässt sich beispielsweise durch den Einsatz eines ringförmigen Wälzlagers aufnehmen. Die translatorische Bewegungskomponente beansprucht die Führungsbuchse 160A in Längsrichtung, weshalb das Anordnen eines Gleitlagers vorteilhaft ist. Ideal ist ein Lager, welches sowohl die rotatorische Belastung als auch die Belastung in Längsrichtung der Führungsbuchse aufnehmen kann. Die Lagerung reduziert den Verschleiss der Mähmesservorrichtung 100 zusätzlich und steigert somit die Lebensdauer der Mähmesservorrichtung insgesamt.

Innerhalb der Führungsbuchse 160A befindet sich eine vorgespannte Zugfeder 170. Die Zugfeder 170 ist am ersten Ende über eine Federschraube 172 mit der oberen Haltevorrichtung 150 verbunden. Die Zugfeder 170 erstreckt sich durch die Führungsbuchse 160A hindurch und ist an ihrem zweiten Ende mit einem Buchsendecl<el 174 verbunden. Der Buchsendeckel 174 weist gegenüber der Gewindebuchse 164A einen radialen Überstand 168 auf, wodurch die Zugfeder 170 einerseits unter Zugspannung gesetzt werden kann und andererseits über den Buchsendeckel 174 von außen einstellbar ist.

Durch die Zugspannung der Zugfeder 170 wird die obere Haltevorrichtung 150 an den Messerbalken 110 gezogen. Durch das Anziehen der oberen Haltevorrichtung 150 an den Messerbalken 110 wird eine Anpresskraft des oberen Schneidmessers 140 auf das untere Schneidmesser 180 (nicht gezeigt) bewirkt. Die Führungsbuchse 160A stellt über ihre Lager 166 innerhalb der Gewindebuchse 164A sicher, dass die Zugfeder 170 ausschliesslich auf Zug beansprucht werden kann. Dadurch wird die Anpresskraft des oberen Schneidmessers 140 auf das untere Schneidmesser 180 nicht durch eine Kippbewegung der oberen Haltevorrichtung 150 erzeugt, sondern durch eine reine Zugbewegung der oberen Haltevorrichtung 150 übertragen. Die Wirkrichtung der Anpresskraft auf das obere Schneidmesser 140 wirkt somit parallel zur Längsrichtung der Führungsbuchse 160A.

Die obere Haltevorrichtung 150 weist zudem eine Kröpfung 152 auf. Die Kröpfung 152 ist zwischen Führungsbuchse 160A und dem oberem Schneidmesser 140 angeordnet, wodurch die Anpresskraft der Zugfeder 170 optimal vom oberen Schneidmesser 140 zum unteren Schneidmesser 180 übertragen werden kann. Die Kröpfung 152 kompensiert somit die räumliche Ausdehnung der Zugfeder 170, welche durch die Orientierung der Führungsbuchse 160A orthogonal zum Messerbalken angeordnet ist. Das obere Schneidmesser 140 ist in dem Schneidmesserlager 142 der oberen Haltevorrichtung 150 geführt.

Die Figur 4 zeigt eine erfindungsgemässe Mähmesservorrichtung 100 in einer Schnittansicht auf Höhe der unteren Haltevorrichtung 190 nach einer beispielhaften Ausführungsform. Im Unterschied zur oberen Haltevorrichtung 150 ist die untere Haltevorrichtung 190 ohne Federelement fest mit dem Messerbalken 110 verbunden. Dies hat insbesondere den Zweck, dass die bereits beschriebene, durch die Zugfeder 170 erzeugte, Anpresskraft des oberen Schneidmessers 140 auf das untere Schneidmesser 180 aufgenommen werden kann.

Die untere Haltevorrichtung 190 ist mittels einer Führungsbuchse 160B an dem Messerbalken 110 fixiert. Die Führungsbuchse 160B liegt hierbei innerhalb einer Gewindebuchse 164B, welche über ein Aussengewinde 162 mit dem Messerbalken 110 verschraubt ist. Zum Verschrauben der Gewindebuchse 160B wird diese durch die Aufnahme 112 im Messerbalken 110 hindurch geführt. Eine zusätzliche Kontermutter 163 sichert die eingeschraubte Gewindebuchse 164B an dem Messerbalken 110 zusätzlich ab. Die Gewindebuchse 164B kann somit ohne gesteigerten Montageaufwand demontiert oder gewechselt werden. Zusätzlich kann mittels des Gewindes der Gewindebuchse 164B die absolute Position der Gewindebuchse 164B relativ zum Messerbalken 110 verändert werden. Dies ermöglicht eine präzise Einstellung der unteren Haltevorrichtung 190 in Abstimmung mit der oberen Haltevorrichtung 150.

Zusätzlich weist die untere Haltevorrichtung 190 eine Schraube 192 auf, welche sich vollständig durch die Führungsbuchse 164B hindurch erstreckt und die untere Haltevorrichtung 190 an dem Messerbalken 110 fixiert. Die Schraube 192 verfügt über einen leicht zugänglichen Schraubenkopf 193, über welchen die Fixierung oder das Lösen der unteren Haltevorrichtung 190 mit dem Messerbalken 110 einfach erfolgen kann. Zusätzlich wird durch das Hindurchführen der Schraube 192 durch die vollständige Führungsbuchse 164B hindurch, eine symmetrische Krafteinleitung realisiert.

Des Weiteren weist die untere Haltevorrichtung 190 eine Kröpfung 194 auf. Die Kröpfung 194 ist zwischen Führungsbuchse 160B und dem unteren Schneidmesser 180 angeordnet. Das untere Schneidmesser 180 ist in einem Schneidmesserlager 142 der unteren Haltevorrichtung 190 geführt.

Die Figur 5 zeigt eine schematische Darstellung eines oberen Schneidmessers 140 mit Messerkopf 200. Das obere Schneidmesser 140 umfasst mehrere Klingenelemente 145, die über den Messerrücken 144 miteinander verbunden ausgebildet sind. Die Klingenelemente 145 und der Messerrücken 144 bilden somit ein gemeinsames integrales Bauteil, welches beispielsweise aus einem Flachstahl ausgestanzt hergestellt ist. Zusätzlich ist der auswechselbare Messerkopf 200 gezeigt, welcher die Antriebsbewegung eines seitlichen Antriebs (nicht gezeigt) auf das obere Schneidmesser 140 überträgt. Der Messerkopf 200 hat ein Eingreifelement 202, welches zum Eingreifen in eine korrespondierende Eingreifaufnahme 206 im Messerrücken 200 des oberen Schneidmessers 140 ausgebildet ist. Das Eingreifelement 202 des Messerkopfes 200 umfasst insgesamt vier Eingreifvorsprünge 204, welche mit insgesamt vier Eingreiföffnungen 208 korrespondieren, die in den Messerrücken 200 des oberen Schneidmessers eingebracht sind.

Jedes Klingenelement 145 hat zwei V-förmig ausgebildete Schneidkanten 147. Die Schneidkanten 147 sind an jeder Schneidmesserspitze 146 unterbrochen, während sich die Schneidkanten 147 zweier benachbarter Klingenelemente 145 kontinuierlich über den Messerrücken 144 erstrecken. Jedes dritte Klingenelement 145 des oberen Schneidmessers 140 hat ein Schneidmesserlager 142, welches zum Anordnen der oberen Haltevorrichtung 150 ausgebildet ist.

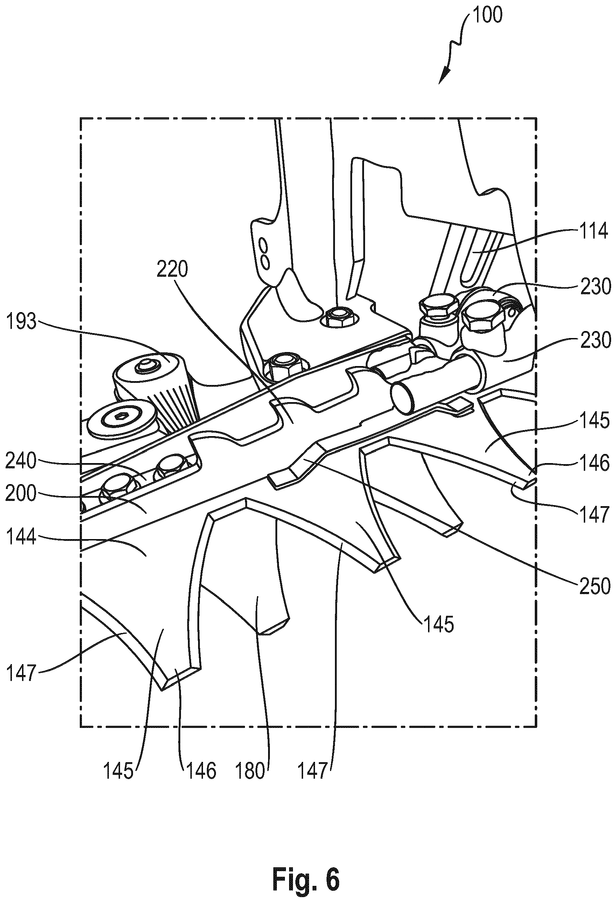

Die Figur 6 zeigt eine Mähmesservorrichtung 100 nach einer weiteren Ausführungsform. Die Mähmesservorrichtung 100 umfasst das Doppelmesser-Schneidsystem 111, ein oberes Schneidmesser 140 und ein unteres Schneidmesser 180. Sowohl das obere Schneidmesser 140 als auch das untere Schneidmesser 180 haben jeweils mehrere Klingenelemente 145. Die Klingenelemente 145 haben jeweils voneinander weggerichtet angeordnete Schneidkanten 147. Die Schneidkanten 147 jeden Klingenelements 145 verlaufen ausgehend von dem Messerrücken 144, 184 in Richtung der Schneidmesserspitze 146 konkav aufeinander zu.

Die Klingenelemente 145 sind über den Messerrücken 144, 184 miteinander verbunden, wobei sich die Schneidkante 147 eines ersten klingenelements 145 und die gegenüberliegende Schneidkante 147 eines benachbarten Klingenelements 145 kontinuierlich über den Messerrücken 144, 184 erstreckt. Mit anderen Worten verläuft die Schneidkante 147 kontinuierlich entlang des gesamten Schneidmessers 140, 180.

Derjenige Abschnitt der Schneidkante 147, welcher zwischen zwei benachbarten Klingenelementen 145 verläuft, erstreckt sich parallel zur Längsachse des Messerrückens 144, 184. Die Klingenelemente 145 und der Messerrücken 144, 184 sind als gemeinsames integrales Bauteil ausgebildet und aus gehärtetem Flachstahl gefertigt. Durch die von jedem Klingenelement 145 weggerichteten konkaven Schneidkanten 147 und den parallel zur Längsachse des Messerrückens 144, 184 verlaufenden Abschnitt der Schneidkante 147 wird ein Winkel α definiert. Der Winkel α beträgt etwa 130°.

Seitlich umfasst die Mähmesservorrichtung 100 einen auswechselbaren Messerkopf 200 der dem Einleiten einer Antriebsbewegung durch einen seitlichen Antrieb 114 auf das Doppelmesser-Schneidsystem 111 dient. Zwischen dem Verbindungsabschnitt 240 des Messerkopfs 200 mit dem Messerrücken 144, 184 und dem Anschluss 230 zum Antrieb 114 befindet sich ein elastischer Abschnitt 220, welcher aus einem Metall hergestellt ist. Der elastische Abschnitt 220 dient dem Dämpfen einer Bewegung in einer Ebene, welche parallel zu der durch die Klingenelemente 145 des oberen Schneidmessers 140 und des unteren Schneidmessers 180 definierten Ebene ausgebildet ist.

Der Messerkopf 200 umfasst ein Federelement 250, welches zwischen Messerkopf 200 und oberen Schneidmesser 140 angeordnet ist. Das Federelement 250 ist als Blattfeder ausgebildet und dient dem Dämpfen einer Relativbewegung zwischen dem Antrieb 114 und dem Messerkopf 200. Das Federelement 250 dämpft primär Bewegungen ab, die in einer Ebene stattfinden, welche orthogonal zu derjenigen Ebene ist, die durch die Klingenelemente 145 des oberen Schneidmessers 140 oder des unteren Schneidmessers 180 definiert ist.

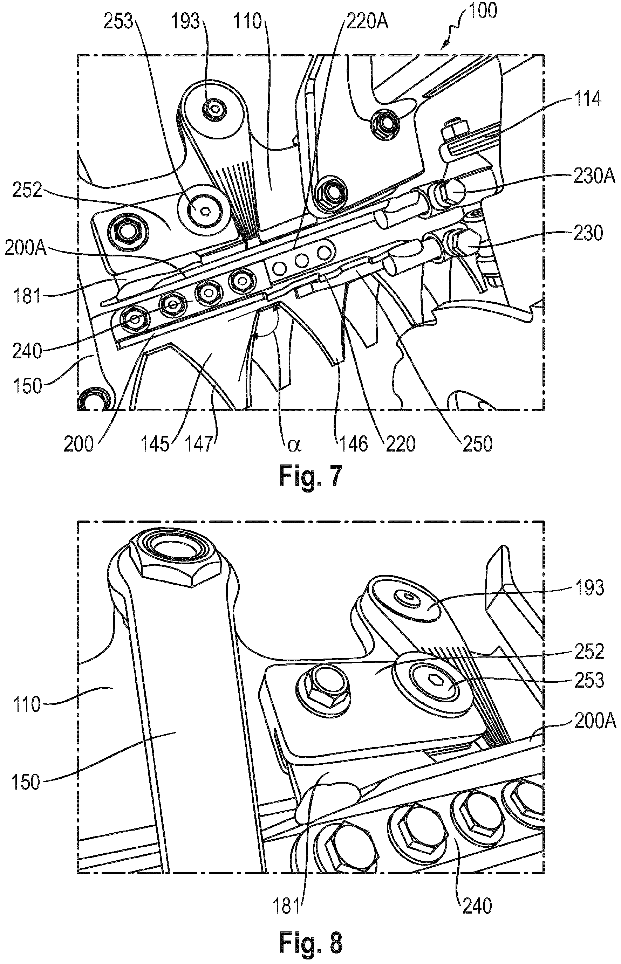

Die Figur 7 zeigt die Mähmesservorrichtung 100 nach der Ausführungsform in Figur 6 in einer Draufsicht. Zu sehen ist die Mähmesservorrichtung 100 mit dem Doppelmesser-Schneidsystem 111 umfassend das obere Schneidmesser 140 und das untere Schneidmesser 180.

An dem Messerbalken 110 befindet sich eine obere Haltevorrichtung 150 zum Halten des oberen Schneidmessers 140 und eine untere Haltevorrichtung 190 zum Halten des unteren Schneidmessers 180. Zusätzlich ist dem Messerbalken 110 ein erstes Führungsmittel 252 zugeordnet, welches unmittelbar auf den Messerbalken 110 montiert ist. Das erste Führungsmittel 252 dient dem Führen des unteren Schneidmessers 180 während einer Bewegung durch den einseitigen Antrieb 114 parallel zu dem Messerbalken 110.

Das erste Führungsmittel 252 kann zwischen einer Betriebsposition und einer Freigabeposition hin- und hergeschwenkt werden. In der Freigabeposition kann das untere Schneidmessers 180 freigegeben und von der Mähmesservorrichtung 100 entnommen werden.

Das untere Schneidmesser 180 hat einen Gleitvorsprung 181, welcher das untere Schneidmesser 180 während der Bewegung durch den einseitigen Antrieb 114 parallel zu dem Messerbalken 110 gleitend in einem Eingriff des ersten Führungsmittels 252 führt. Der Gleitvorsprung 181 ist unmittelbar an dem unteren Messerkopf 200A angeordnet

Das erste Führungsmittel 252 umfasst ferner eine Fixiereinrichtung 253 in Form einer Schraube mit Inbus-Kopf zum Fixieren des ersten Führungsmittels 252 in der Betriebsposition. So kann die Fixiereinrichtung 253 entfernt werden und das erste Führungsmittel 252 kann einfach in die Freigabeposition geschwenkt werden. Dadurch wird der Gleitvorsprung 181 am unteren Messerkopf 200A freigegeben. Zwischen dem Gleitvorsprung 181 und dem Anschluss 230A zum Antrieb 114 befindet sich ein elastischer Abschnitt 220A, der zum Dämpfen einer Bewegung in einer Ebene ausgebildet ist, die parallel zu der durch die Klingenelemente 145 des oberen Schneidmessers 140 und des unteren Schneidmessers 180 definierten Ebene angeordnet ist.

Die Figur 8 zeigt eine vergrösserte Teilansicht der Mähmesservorrichtung 100 nach der Ausführungsform gemäss der Figur6.

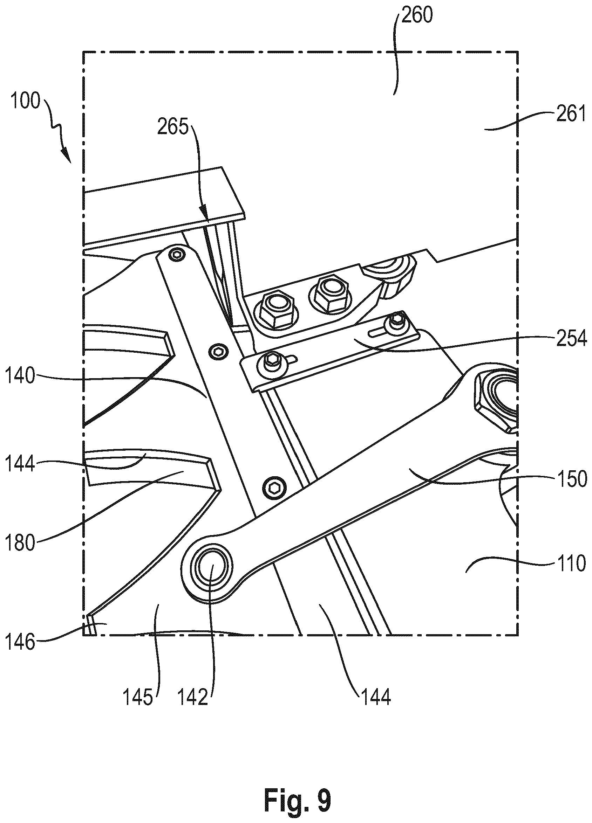

Die Figur 9 zeigt die Mähmesservorrichtung 100 nach einer zusätzlichen Ausführungsform. Der Messerbalken 110 hat ein zweites Führungsmittel 254. Das zweite Führungsmittel 254 dient dem Führen des oberen Schneidmessers 140 während der Bewegung durch den einseitigen Antrieb 114 parallel und relativ zum Messerbalken 110. Das zweite Führungsmittel 254 ist zwischen einer Betriebsposition zum Führen des oberen Schneidmessers 140 und einer Freigabeposition zum Freigeben des oberen Schneidmessers 140 überführbar ausgebildet. Um das zweite Führungsmittel 254 in die Freigabeposition zu überführen sind lediglich zwei Fixiermittel in Form von Inbusschrauben zu lösen. Im Anschluss an das Lösen der Fixiermittel kann das zweite Führungsmittel 254 in die Freigabeposition geschoben werden. Zusätzlich ist das zweite Führungsmittel 254 zum Führen des unteren Schneidmessers 180 (nicht gezeigt) eingerichtet. Hierfür greift das zweite Führungsmittel 254 über einen Führungsarm (nicht gezeigt) zwischen dem oberen Schneidmesser 140 und dem Messerbalken 110 hindurch. Somit können das obere Schneidmesser 140 und das untere Schneidmesser 180 im Betrieb geführt und gleichzeitig freigegeben werden.

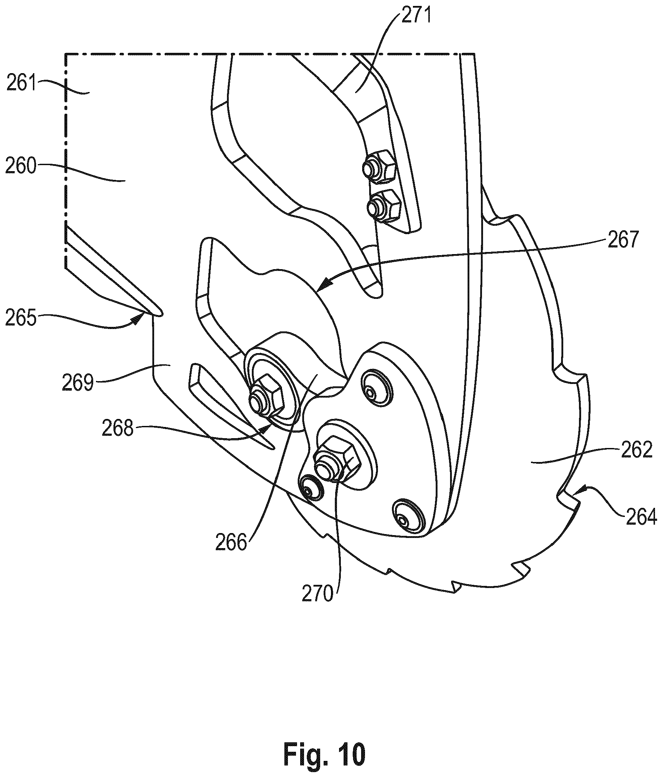

Die Figur 10 zeigt eine weitere Ausführungsform einer Mähmesservorrichtung 100. Die Mähmesservorrichtung 100 umfasst erneut den im Wesentlichen horizontal angeordneten Messerbalken 110 mit den Schneidmessern 140, 180, welche über einen Antrieb 114 (nicht gezeigt) in eine Hin- und Herbewegung versetzbar sind. Die Mähmesservorrichtung 100 weist zwei Laufschuhe 260 auf, die in Längsrichtung des Messerbalkens 110 im Bereich von dessen Enden angeordnet sind. Jeder Laufschuh 260 weist ein Schwadrad 262 auf, welches im Wesentlichen in vertikaler Richtung angeordnet und drehbar ausgebildet ist. Das Schwadrad 262 ist derart am Laufschuh 260 angeordnet, dass ein unterer Scheitelpunkt des Schwadrades 262 in vertikaler Richtung unterhalb der Schneidebene der Schneidmesser 140, 180 liegt.

Am Umfang des Schwadrades 262 befindet sich eine Verzahnung 264 mit einer Vielzahl von Zähnen, wobei jeder Zahn über eine bogenförmig ansteigende lange Flanke sowie über eine im Wesentlichen rechtwinklig abfallende Flanke verfügt. Das Schwadrad 262 ist hierbei derart am Laufschuh 260 angeordnet, dass am unteren Scheitelpunkt der Drehung die kurze Flanke in Mährichtung zeigt. Das Schwadrad 262 ist in einer Vertikalrichtung verstellbar und zur selbstständigen Anpassung an eine Bodenoberfläche im Betrieb der Mähmesservorrichtung 100 ausgebildet. Hierbei ist das Schwadrad 262 über einen Pendelarm 266 an dem Laufschuh 260 gelagert. Der Laufschuh 260 verfügt über einen ersten Anschlag 267 und einem zweiten Anschlag 268, um ein Winkelintervall für den Pendelarm 266 des Schwadrades 262 vorzugeben. Innerhalb dieser beiden Anschläge 267, 268 kann sich der Pendelarm 266 frei bewegen und kann sich selbstständig an eine Bodenoberfläche im Betrieb der Mähmesservorrichtung 100 anpassen. Die Figur 10 zeigt den Pendelarm 266 in Anlage an den zweiten Anschlag 268, wodurch das Schwadrad 262 die tiefstmögliche Position einnimmt.

Der Laufschuh 260 weist eine Aussparung 265 auf, wodurch der Laufschuh 260 nach unten offen ausgebildet ist. Der Laufschuh 260 verfügt somit über eine Aussparung 265, in welcher jeweils ein Ende der Schneidmesser 140, 180 aufgenommen wird. Ein Abweiser 269 ragt in vertikaler Richtung von oben mindestens bis zu der Schneidebene der Schneidmesser 140, 180 herab, wobei in Mährichtung ein Abstand zu den Schneidmessern 140, 180 besteht. Im Bereich der Aussparung 265 ist unterhalb der Schneidmesser 140, 180 keine weitere Komponente der Mähmesservorrichtung 100 angeordnet, wodurch zwischen den Schneidmessern 140, 180 und dem Boden ein Freiraum besteht.

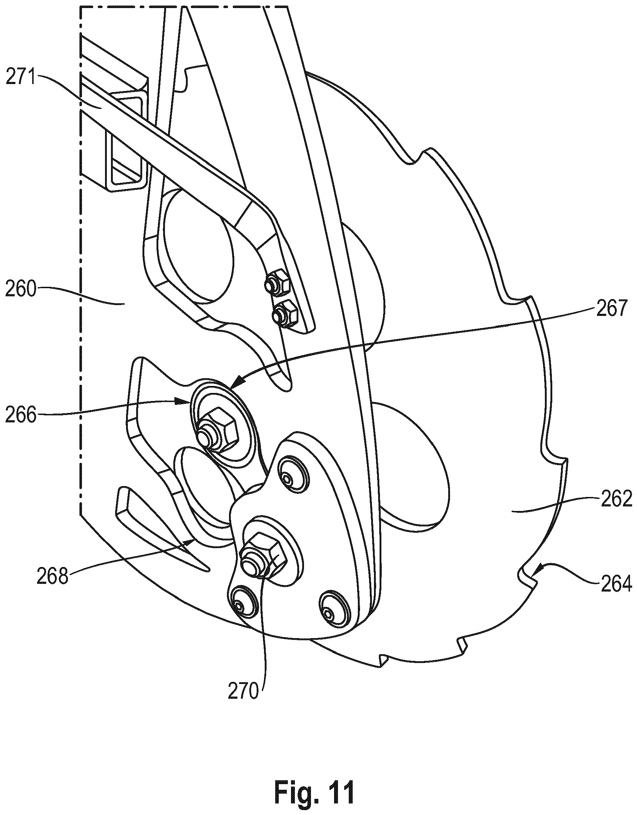

Die Figur 11 zeigt eine alternative Darstellung der Mähmesservorrichtung 100 gemäss der Ausführungsform aus Figur 10. Im Unterschied zur Figur 10 zeigt die Figur 11 den Pendelarm 266 in Anlage an den ersten Anschlag 267, wodurch das Schwadrad 262 die höchstmögliche Position einnimmt. Auf einer wiederholte Beschreibung identischer Merkmale wird an dieser Stelle verzichtet.

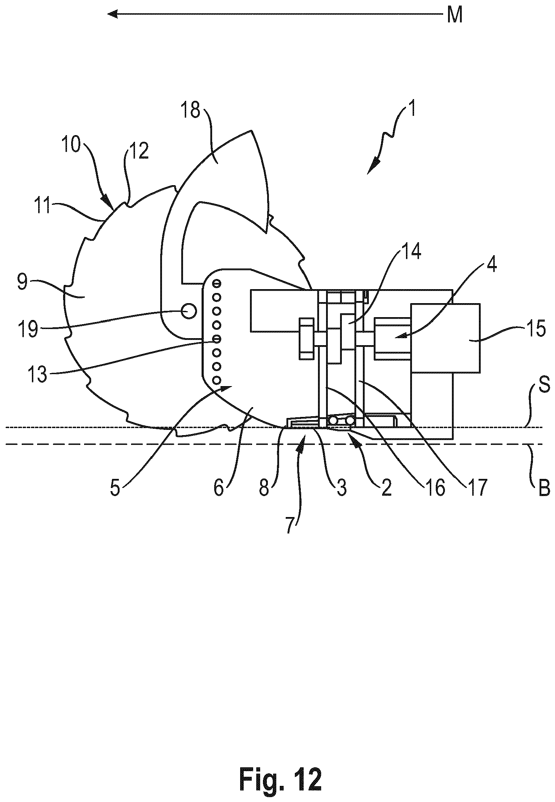

Die Fig. 12 zeigt eine Ausführungsform eines erfindungsgemässen Mähwerks 1 von der Seite. Das Mähwerk 1 kann gemäss dieser Erfindung auch als Mähmesservorrichtung 100 bezeichnet werden. Das Mähwerk 1 verfügt über einen Mähbalken2, dessen Längsachse sich in der Betrachtungsrichtung erstreckt. Der Mähbalken2 kann auch als Messerbalken 110 bezeichnet werden. Der Mähbalken2 erstreckt sich im Wesentlichen horizontal, d.h. im Wesentlichen parallel zu einem Boden B. Bei der gezeigten Ausführungsform weist der Mähbalken 2 eine Doppelmesserschiene 3 auf. Die Doppelmesserschiene 3 kann auch als Doppelmesser-Schneidsystem 111 bezeichnet werden. Die Doppelmesserschiene 3 weist eine Vielzahl an Messerklingen auf, die sich in Mährichtung M von der Doppelmesserschiene 3 weg erstrecken und die in zwei übereinanderliegenden Messerschienen angeordnet sind. Die beiden Messerschienen der Doppelmesserschiene 3 können durch einen Antrieb 4 relativ zueinander in eine Hin- und Herbewegung versetzt werden, um Schnittgut zu mähen.

Das Mähwerk 1 verfügt ferner über zwei Laufschuhe 5, von denen auf der Figur lediglich der in Mährichtung M linke Laufschuh 5 zu sehen ist. Der Laufschuh 5 verfügt über ein Leitblech 6, welches sich in Mährichtung M vor dem Mähbalken2 bzw. der Doppelmesserschiene 3 befindet und sich teilweise oberhalb des Mähbalkens 2 und der Doppelmesserschiene 3 erstreckt. Das Leitblech 6 erstreckt sich im Wesentlichen in vertikaler Richtung, wobei die Hauptfläche des Leitblechs 6 im Wesentlichen parallel zur Mährichtung M steht.

Das Leitblech 6 umfasst eine Aussparung 7, in welcher ein Ende der Doppelmesserschiene 3 aufgenommen werden kann, sowie ein Abweiser 8, welcher sich in vertikaler Richtung vom Leitblech 6 bis mindestens zur Schneidebene S der Doppelmesserschiene 3 erstreckt. Der Abweiser 8 steht in Mährichtung in einem Abstand zum Doppelmesserbalken 3. Durch diese Ausgestaltung befindet sich zwischen Laufschuh 2 und dem Boden 1 kein Element, welches Schnittgut flachdrückt.

Am Leitblech 6 ist ferner ein Schwadrad 9 über ein Wälzlager 19 drehbar gelagert. Das Schwadrad 9 liegt in der Form einer Scheibe vor, die vertikal ausgerichtet ist und welche an ihrem Umfang eine Mehrzahl an Zähnen 10 verfügt. Jeder Zahn 10 verfügt über eine bogenförmig ansteigende, lange Flanke 11 sowie einer im Wesentlichen rechtwinklig abfallenden kurzen Flanke 12. Das Schwadrad 9 ist derart am Leitblech 6 angeordnet, dass dieses an einem unteren Scheitelpunkt unterhalb der Schneidebene S ragt und die kurze Flanke 12 der Zähne 10 in Mährichtung M zeigt.

Der Antrieb 4 verfügt über einen Kurbeltrieb 14, der durch einen Motor 15 drehend angetrieben wird. Der Kurbeltrieb 14 ist über einen vorderen Schwinghebel 16 sowie einem hinteren Schwinghebel 17 mit den beiden Messerschienen der Doppelmesserschiene 3 verbunden, so dass diese in eine Hin- und Herbewegung versetzt werden können.

Das Mähwerk 1 verfügt ferner über eine Vorrichtung 13 zum Verschieben der Laufschuhe 2 in vertikaler Richtung. Zudem ist am Leitblech 6 ein Leitstab 18 angeordnet.

## Patentansprüche

1. Mähmesservorrichtung (100) mit:
einem Messerbalken (110), und
einem Doppelmesser-Schneidsystem, wobei das Doppelmesser-Schneidsystem ein oberes Schneidmesser (140) und ein unteres Schneidmesser (180) umfasst, welche relativ zueinander bewegbar ausgebildet sind, wobei
das obere Schneidmesser (140) mittels einer oberen Haltevorrichtung (150) und das untere Schneidmesser (180) mittels einer unteren Haltevorrichtung (190) mit dem Messerbalken (110) verbunden ausgebildet sind, und wobei
die obere Haltevorrichtung (150) mittels einer Führungsbuchse (160A) an dem Messerbalken (110) gelagert ist;
**dadurch gekennzeichnet, dass**
innerhalb der Führungsbuchse (160A) eine vorgespannte Zugfeder (170) angeordnet ist,
wobei die Zugkraft der Zugfeder (170) dazu ausgebildet ist, über die obere Haltevorrichtung (150) eine Anpresskraft des oberen Schneidmessers (140) auf das untere Schneidmesser (180) zu bewirken.

2. Mähmesservorrichtung (100) nach Anspruch 1, **dadurch gekennzeichnet, dass** die Führungsbuchse (160A) in einer Gewindebuchse (164A) gehalten ist.

3. Mähmesservorrichtung (100) nach Anspruch 2, **dadurch gekennzeichnet, dass** die Gewindebuchse (164A) über ein Aussengewinde (162) mit dem Messerbalken (110) verschraubbar ausgebildet ist.

4. Mähmesservorrichtung (100) nach einem der voranstehenden Ansprüche, **dadurch gekennzeichnet, dass** die Führungsbuchse (160A) über ein Lager (166) in der Gewindebuchse (164A) gehalten ist.

5. Mähmesservorrichtung (100) nach Anspruch 4, **dadurch gekennzeichnet, dass** das Lager (166) an einer Oberseite und einer Unterseite der Gewindebuchse (164A) ausgebildet ist.

6. Mähmesservorrichtung (100) nach einem der voranstehenden Ansprüche, **dadurch gekennzeichnet, dass** die Zugfeder (170) mittels einer Federschraube (172) spannbar ausgebildet ist.

7. Mähmesservorrichtung (100) nach Anspruch 6, **dadurch gekennzeichnet, dass** die Federschraube (172) über einen Buchsendeckel (174) von außen einstellbar ausgebildet ist.

8. Mähmesservorrichtung (100) nach Anspruch 7, **dadurch gekennzeichnet, dass** der Buchsendeckel (174) gegenüber der Gewindebuchse (164A) einen radialen Überstand (168) aufweist.

9. Mähmesservorrichtung (100) nach einem der voranstehenden Ansprüche, **dadurch gekennzeichnet, dass** die obere Haltevorrichtung (150) eine Kröpfung (152) aufweist, welche zwischen Führungsbuchse (160A) und oberem Schneidmesser (140) angeordnet ist.

10. Mähmesservorrichtung (100) nach einem der voranstehenden Ansprüche, **dadurch gekennzeichnet, dass** das obere Schneidmesser (140) in einem Schneidmesserlager (142) der oberen Haltevorrichtung (150) geführt ist.

11. Mähmesservorrichtung (100) nach einem der voranstehenden Ansprüche, **dadurch gekennzeichnet, dass** die untere Haltevorrichtung (190) mittels einer Führungsbuchse (160B) an dem Messerbalken (110) gelagert ist

12. Mähmesservorrichtung (100) nach Anspruch 11, **dadurch gekennzeichnet, dass** die Führungsbuchse (160B) in einer Gewindebuchse (164B) gehalten ist.

13. Mähmesservorrichtung (100) nach Anspruch 12, **dadurch gekennzeichnet, dass** die Gewindebuchse (164B) über ein Aussengewinde (162) mit dem Messerbalken (110) verschraubbar ausgebildet ist.

14. Mähmesservorrichtung (100) nach einem der Ansprüche 11 bis 13, **dadurch gekennzeichnet, dass** die untere Haltevorrichtung (190) mittels einer Schraube (192) mit Messerbalken (110) verschraubbar ist, wobei sich die Schraube (192) vollständig durch die Führungsbuchse (164B) hindurch erstreckt.

15. Mähmesservorrichtung (100) nach einem der voranstehenden Ansprüche, **dadurch gekennzeichnet, dass** das obere Schneidmesser (140) eine Vielzahl von 1<lingenelementen (148) umfasst, wobei jedem dritten Klingenelement (148) eine obere Haltevorrichtung (150) zugeordnet ist.

## Claims

1. Mower knife device (100) with:
a knife bar (110), and
a double-knife cutting system, wherein the double-knife cutting system comprises an upper cutting knife (140) and a lower cutting knife (180) which are configured to be movable relative to each other, wherein
the upper cutting knife (140) is configured to be connected to the knife bar (110) by means of an upper holding device (150) and the lower cutting knife (180) is configured to be connected to the knife bar (110) by means of a lower holding device (190), and wherein
the upper holding device (150) is mounted on the knife bar (110) by means of a guide bush (160A);
**characterized in that**
a pre-tensioned tension spring (170) is arranged inside the guide bush (160A), wherein the tensile force of the tension spring (170) is configured to bring about a contact pressure of the upper cutting knife (140) on the lower cutting knife (180) via the upper holding device (150).

2. Mower knife device (100) according to claim 1, **characterized in that** the guide bush (160A) is held in a threaded bush (164A).

3. Mower knife device (100) according to claim 2, **characterized in that** the threaded bush (164A) is configured such that it can be screwed to the knife bar (110) via an external thread (162).

4. Mower knife device (100) according to one of the preceding claims, **characterized in that** the guide bush (160A) is held in the threaded bush (164A) via a bearing (166).

5. Mower knife device (100) according to claim 4, **characterized in that** the bearing (166) is configured on an upper side and a lower side of the threaded bush (164A).

6. Mower knife device (100) according to one of the preceding claims, **characterized in that** the tension spring (170) is configured such that it is tensible by means of a spring screw (172).

7. Mower knife device (100) according to claim 6, **characterized in that** the spring screw (172) is configured to be adjustable from the outside via a bush cover (174).

8. Mower knife device (100) according to claim 7, **characterized in that** the bush cover (174) comprises a radial protrusion (168) relative to the threaded bush (164A).

9. Mower knife device (100) according to one of the preceding claims, **characterized in that** the upper holding device (150) comprises a bend (152), which is arranged between the guide bush (160A) and the upper cutting knife (140).

10. Mower knife device (100) according to one of the preceding claims, **characterized in that** the upper cutting knife (140) is guided in a cutting knife bearing (142) of the upper holding device (150).

11. Mower knife device (100) according to one of the preceding claims, **characterized in that** the lower holding device (190) is bearing-mounted on the knife bar (110) by means of a guide bush (160B)

12. Mower knife device (100) according to claim 11, **characterized in that** the guide bush (160B) is held in a threaded bush (164B).

13. Mower knife device (100) according to claim 12, **characterized in that** the threaded bush (164B) is configured such that it is screwable to the knife bar (110) via an external thread (162).

14. Mower knife device (100) according to one of claims 11 to 13, **characterized in that** the lower holding device (190) is screwable to the knife bar (110) by means of a screw (192), wherein the screw (192) extends completely through the guide bush (164B).

15. Mower knife device (100) according to one of the preceding claims, **characterized in that** the upper cutting knife (140) comprises a plurality of blade elements (148), wherein an upper holding device (150) is associated with every third blade element (148).

## Revendications

1. Dispositif de lame de coupe (100) comprenant :
une barre de coupe (110), et
un système de coupe à double lame, dans lequel le système de coupe à double lame comprend une lame de coupe supérieure (140) et une lame de coupe inférieure (180) qui sont conçues pour être mobiles l'une par rapport à l'autre,
dans lequel la lame de coupe supérieure (140) est conçue pour être reliée à la barre de coupe (110) au moyen d'un dispositif de maintien supérieur (150) et la lame de coupe inférieure (180) est conçue pour être reliée à la barre de coupe (110) au moyen d'un dispositif de maintien inférieur (190), et
dans lequel le dispositif de maintien supérieur (150) est logé sur la barre de coupe (110) au moyen d'une douille de guidage (160A).
**caractérisé en ce que**
un ressort de traction précontraint (170) est disposé à l'intérieur de la douille de guidage (160A), dans lequel la force de traction du ressort de traction (170) est conçue pour provoquer une force de pression de la lame de coupe supérieure (140) sur la lame de coupe inférieure (180) par l'intermédiaire du dispositif de maintien supérieur (150).

2. Dispositif de lame de coupe (100) selon la revendication 1, **caractérisé en ce que** la douille de guidage (160A) est maintenue dans une douille filetée (164A).

3. Dispositif de lame de coupe (100) selon la revendication 2, **caractérisé en ce que** la douille filetée (164A) est conçue de manière à pouvoir être vissée à la barre de coupe (110) par l'intermédiaire d'un filetage extérieur (162).

4. Dispositif de lame de coupe (100) selon l'une des revendications précédentes, **caractérisé en ce que** la douille de guidage (160A) est maintenue dans la douille filetée (164A) par un palier (166).

5. Dispositif de lame de coupe (100) selon la revendication 4, **caractérisé en ce que** le palier (166) est formé sur une face supérieure et une face inférieure de la douille filetée (164A).

6. Dispositif de lame de coupe (100) selon l'une des revendications précédentes, **caractérisé en ce que** le ressort de traction (170) est conçu pour être tendu au moyen d'une vis à ressort (172).

7. Dispositif de lame de coupe (100) selon la revendication 6, **caractérisé en ce que** la vis à ressort (172) est conçue pour être réglable de l'extérieur par l'intermédiaire d'un couvercle de douille (174).

8. Dispositif de lame de coupe (100) selon la revendication 7, **caractérisé en ce que** le couvercle de douille (174) présente une saillie radiale (168) par rapport à la douille filetée (164A).

9. Dispositif de lame de coupe (100) selon l'une des revendications précédentes, **caractérisé en ce que** le dispositif de maintien supérieur (150) comporte un coude (152) disposé entre la douille de guidage (160A) et la lame de coupe supérieure (140).

10. Dispositif de lame de coupe (100) selon l'une des revendications précédentes, **caractérisé en ce que** la lame de coupe supérieure (140) est guidée dans un palier de lame de coupe (142) du dispositif de maintien supérieur (150).

11. Dispositif de lame de coupe (100) selon l'une des revendications précédentes, **caractérisé en ce que** le dispositif de maintien inférieur (190) est monté sur la barre de coupe (110) au moyen d'une douille de guidage (160B).

12. Dispositif de lame de coupe (100) selon la revendication 11, **caractérisé en ce que** la douille de guidage (160B) est maintenue dans une douille filetée (164B).

13. Dispositif de lame de coupe (100) selon la revendication 12, **caractérisé en ce que** la douille filetée (164B) est conçue de manière à pouvoir être vissée avec la barre de coupe (110) par l'intermédiaire d'un filetage extérieur (162).

14. Dispositif de lame de coupe (100) selon l'une des revendications 11 à 13, **caractérisé en ce que** le dispositif de maintien inférieur (190) est configuré pour pouvoir être vissé à la barre de coupe (110) au moyen d'une vis (192), ladite vis (192) s'étendant entièrement à travers la douille de guidage (164B).

15. Dispositif de lame de coupe (100) selon l'une des revendications précédentes, **caractérisé en ce que** la lame de coupe supérieure (140) comprend une pluralité d'éléments de lame (148), dans lequel un dispositif de maintien supérieur (150) est associé à chaque troisième élément de lame (148).
